(19) **Europäisches Patentamt / European Patent Office / Office européen des brevets**

(11) **EP 2 473 274 B1**

(12) **FASCICULE DE BREVET EUROPEEN**

(45) Date de publication et mention de la délivrance du brevet:
**07.05.2014 Bulletin 2014/19**

(21) Numéro de dépôt: **10747924.8**

(22) Date de dépôt: **27.07.2010**

(51) Int Cl.:
*B01J 23/88* (2006.01)    *C10G 45/08* (2006.01)
*C10G 65/04* (2006.01)    *C01G 3/00* (2006.01)

(86) Numéro de dépôt international:
**PCT/FR2010/000543**

(87) Numéro de publication internationale:
**WO 2011/030009 (17.03.2011 Gazette 2011/11)**

(54) **PROCEDE DE CONVERSION DE CHARGES ISSUES DE SOURCES RENOUVELABLES EN CO-TRAITEMENT AVEC UNE CHARGE PETROLIERE METTANT EN OEUVRE UN CATALYSEUR A BASE DE NICKEL ET DE MOLYBDENE**

VERFAHREN ZUR UMWANDLUNG VON LADUNGEN AUS ERNEUERBAREN QUELLEN MITTELS GEMEINSAMER VERARBEITUNG MIT EINEM ERDÖLSTOFF UND VERWENDUNG EINES KATALYSATORS AUF MOLYBDÄN- UND NICKELBASIS

METHOD FOR CONVERTING CHARGES FROM RENEWABLE SOURCES INVOLVING COPROCESSING WITH A PETROLEUM FEEDSTOCK, USING A MOLYBDENUM- AND NICKEL-BASED CATALYST

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **02.09.2009   FR 0904162**

(43) Date de publication de la demande:
**11.07.2012   Bulletin 2012/28**

(73) Titulaire: **IFP Energies nouvelles**
**92852 Rueil-Malmaison Cedex (FR)**

(72) Inventeurs:
• **DUPASSIEUX, Nathalie**
  **F-69005 Lyon (FR)**
• **DAUDIN, Antoine**
  **F-69960 Corbas (FR)**
• **CHAPUS, Thierry**
  **F-69001 Lyon (FR)**

(56) Documents cités:
EP-A1- 1 741 768      EP-A1- 2 138 553
FR-A1- 2 910 483      FR-A1- 2 917 423
US-A1- 2004 230 085   US-A1- 2009 158 637

**Description**

La présente invention concerne un procédé d'hydrotraitement d'une charge constituée d'un mélange de charges issues de sources renouvelables et en particulier d'huiles d'origine végétale ou animale, combinées avec des coupes pétrolières visant à produire des bases carburants gazoles.

Elle concerne un procédé permettant d'amener aux spécifications environnementales requises, par exemple un gazole atmosphérique obtenu par distillation directe d'un pétrole brut, en mélange avec une charge issue d'une source renouvelable, de façon à produire des carburants gazole et/ou kérosène de bonne qualité, c'est à dire répondant aux spécifications 2009, c'est à dire présentant moins de 10 ppm de soufre et un indice de cétane amélioré dans le cas du carburant gazole.

La conversion par hydrotraitement des charges issues de sources renouvelables met en oeuvre des réactions complexes qui sont favorisées par un système catalytique hydrogénant. Ces réactions comprennent notamment :

-    l'hydrogénation des insaturations,
-    la désoxygénation selon deux voies réactionnelles :

    -    l'hydrodéoxygénation (HDO): élimination de l'oxygène par consommation d'hydrogène et conduisant à la formation d'eau
    -    la décarboxylation/décarbonylation (DCO): élimination de l'oxygène par formation de monoxyde et dioxyde de carbone : CO et $CO_2$

L'invention concerne le traitement de ces charges d'origine renouvelable en mélange avec des coupes pétrolières d'origine fossile, telles que par exemple les gazoles issus de différentes origines dans le schéma de raffinage.

Les structures chimiques de type triglycérides et/ou acides gras contenues dans les charges issues de sources renouvelables peuvent, dans les conditions opératoires de l'hydrotraitement et avec les catalyseurs utilisés selon l'invention, être totalement converties en hydrocarbures de type paraffines. Sur le principe, le traitement de ce type de charges en mélange avec les coupes gazoles d'origine pétrolière typiquement traitées en raffinerie, présente les avantages suivants :

■ limitation des polymérisations liées à la pré-chauffe de charge renouvelable dans des système de four, la température nécessaire du mélange 'charge renouvelable plus charge pétrolière' étant atteinte en ajustant la température de la charge pétrolière thermiquement plus stable avant mélange. En effet, il est connu de l'homme de l'art que la montée en température (>180°C) des huiles végétales seules favorise grandement la formation de gommes ou de polymères lourds par dégradation thermique ou par thermo-oxydation d'une huile végétale (A. Rosssignol-Castera. "La thermo-oxydation des huiles végétales" Institut des corps gras ITERG -2006). Ce phénomène est accentué par la présence d'insaturations des acides gras et de traces de métaux (tels que Cu, Fe, Zn, Al). Ces réactions produisent principalement des polymères de triglycérides ou de triglycérides préalablement oxydées soit par formation de pont époxyde soit par oligomérisation des doubles liaisons (mécanisme radicalaire) (J.L. PERRIN et coll. "Etude analytique profonde d'huiles chauffées-Techniques analytiques et essais préliminaires" Revue française des corps gras, 1992, vol. 32, N°4, p.151-158). Ces composés sont gênants pour la conduite de procédé car ils sont susceptibles de boucher le réacteur ou de générer des produits de dégradation non souhaités. La chauffe de la charge issue de sources renouvelables par mélange avec le flux d'origine pétrolière et en présence d'hydrogène évite les risques de dégradation thermique des huiles végétales dans les équipements de pré-chauffe du procédé.

diminution par effet de dilution, des teneurs en soufre, en azote et en aromatiques de la charge globalement à traiter au niveau de l'étape d'hydrotraitement du procédé selon l'invention. Les charges d'origine renouvelable sont en effet généralement exemptes de composés aromatiques, et contiennent des teneurs en soufre et en azote plus faibles que les charges d'origine pétrolière et en particulier les gazoles typiquement traitées dans le schéma de raffinage. Ceci permet de relaxer significativement les conditions opératoires requises au niveau de ce traitement, et de diminuer la consommation d'hydrogène de cette étape.

limitation des exothermes liées à l'hydrotraitement de ces charges d'origine végétale et/ou animale. Le traitement en mélange avec une coupe d'origine pétrolière et en particulier gazole permet donc une meilleure gestion de cette exothermie, et de protéger ainsi le catalyseur pour lequel la formation de points chauds serait de nature à promouvoir la formation de coke, et donc de dégrader la stabilité des performances et de réduire la durée de cycle. De plus le gradient thermique est avantageusement utilisé pour chauffer le mélange à la température requise pour l'entrée dans la deuxième étape d'hydrotraitement dans laquelle ont lieu les réactions d'hydrodésulfuration.

■ améliorer la qualité de la coupe gazole globalement produite, et en particulier l'indice de cétane, du fait de la formation, par hydrogénation des structures triglycérides et/ou acides gras, d'hydrocarbures de type paraffines caractérisés par un excellent cétane.

■ augmentation de la solubilité de l'hydrogène dans le mélange à traiter lors de l'étape de déoxygénation. En effet, la solubilité de l'hydrogène est plus élevée dans les charges d'origine pétrolière que dans des charges issues de sources renouvelables seules. Ainsi le mélange d'une charge issue de source renouvelable avec une charge pétrolière conventionnelle permet de d'augmenter la solubilité de l'hydrogène dans le mélange à hydrotraiter et ainsi de limiter l'utilisation de hautes pressions pour augmenter la quantité d'hydrogène en solution nécessaires aux réactions d'hydrogénation et de déoxygénation. Contrôler ainsi le niveau d'hydrogène dissous en phase liquide permet de favoriser les réactions d'hydrodéoxygénation, de limiter les formations de coke sur le catalyseur et les phénomènes de polymérisations des composés oxygénés.

<u>État de la technique antérieure</u>

La demande de brevet EP 1,693,432 A1 (Petrobras) décrit un procédé permettant l'hydroconversion de mélange de 1 % à 75% en volume d'huiles végétales et de 99 % à 25 % en volume d'hydrocarbures dans un seul réacteur d'hydrotraitement, sous une pression de 4 MPa à 10 MPa et opérant à une température comprise entre 320° C et 400°C en présence d'un catalyseur d'hydrotraitement sulfurés de métaux de transition du groupe VIB promus par des métaux du groupe VIII. L'intérêt de cette approche est le gain en terme d'indice de cétane et de diminution de densité apportés par le mélange avec l'huile végétale par rapport aux propriétés obtenues par traitement direct de la base pétrolière. En outre, le mélange des charges hydrocarbonées avec les huiles végétales permet d'améliorer les propriétés à froid des effluents obtenus par rapport à ceux qui seraient obtenus par un traitement des huiles végétales seules.

Le brevet FR2904324 (Total) décrit une mise en oeuvre similaire dans un procédé d'hydrotraitement catalytique sur des catalyseurs de type NiMo, NiW, CoMo, Pt, Pd, d'une charge d'origine pétrolière de type gazole dans laquelle on incorpore des huiles ou des graisses animales à une teneur maximale de 30% poids.

Ces mises en oeuvre présentent néanmoins plusieurs inconvénients. Le premier inconvénient réside dans la mise en oeuvre d'une seule étape pour le co-traitement de l'huile végétale et de la base pétrolière. En effet, ceci est limitant pour la mise en opérations optimales des catalyseurs d'hydrotraitement suscités, qui doivent opérer les réactions de déoxygénation et d'hydrodésulfuration simultanément. L'activité et la stabilité du catalyseur tel qu'utilisé dans ces brevets sont pénalisées en raison de la formation des co-produits monoxyde et dioxyde de carbone issus des réactions de décarboxylation/décarbonylation (élimination de l'oxygène de la charge d'origine renouvelable par formation de monoxyde et dioxyde de carbone) favorisées sur ce type de catalyseur dans les conditions de pression et de température décrites. Ces molécules sont en effet bien connues de l'homme de l'art pour leur effet respectivement de désactivation et d'inhibition sur les catalyseurs d'hydrotraitement (US 2003/0221994). De plus, une mise en oeuvre telle que décrite dans ces documents (EP 1,693,432 A1 et FR2904324) mènerait le raffineur à travailler avec des quantités de catalyseur importante et à des températures plus élevés pour atteindre les spécifications actuelles. Ceci entraînerait une surconsommation d'utilités pour maintenir les hautes températures et un vieillissement accéléré du catalyseur. Compte-tenu du cout des opérations de chargement, déchargement, du prix des matières premières des catalyseurs et de leur recyclage, il paraît important pour les raffineurs de maximiser la durée de cycle de l'unité et par conséquent le temps de vie du catalyseur d'hydrotraitement permettant d'obtenir des carburants répondant aux spécifications.

D'autre part la demande de brevet WO08/084145 propose de mettre en oeuvre le co-traitement un mélange formé d'huiles d'origine végétale ou animale et de bases pétrolières provenant de la distillation ou d'unité de conversion en vue de produire des bases carburants gazoles directement aux spécifications, notamment en terme de teneur en soufre, densité et propriétés de tenue à froid, dans un procédé d'hydrotraitement comprenant deux unités en série avec un stripage intermédiaire. La première unité est plus particulièrement dédiée aux réactions d'hydrodéoxygénation concernant les huiles d'origine végétale ou animale en co-mélange tout en prétraitant la charge hydrocarbonée, tandis que la seconde unité fonctionne à plus haute sévérité pour favoriser l'hydrodésulfuration. Le stripage intermédiaire permet de s'affranchir de la présence de monoxyde de carbone de dioxyde de carbone et d'eau, issus de l'hydrotraitement des triglycérides constituant l'huile d'origine végétale ou animale sur le premier lit catalytique, avant l'étape de désulfuration ultime. L'installation d'un stripage intermédiaire est toutefois coûteuse car elle demande des investissements supplémentaires et une gestion des gaz plus complexe. De plus, le principal inconvénient de cette mise en oeuvre reste la gestion de la corrosion liée à la présence du monoxyde et du dioxyde de carbone. L'investissement en terme de matériaux spéciaux nécessaires à la mise en oeuvre d'un co-traitement avec production de CO et $CO_2$ par décarboxylation et décarbonylation des triglycérides est très élevé.

La demande de brevet FR 2 910 483 décrit un procédé en continu pour la conversion en bases carburants gazoles, de charges provenant de sources renouvelables.

Il existe un besoin industriel fort pour mettre en oeuvre le co-traitement de charge pétrolière et de charge issue de sources renouvelables tout en limitant le coût des investissement, les coûts d'opératoires liés à la désactivation des catalyseurs et la détérioration des unités par corrosions. Afin de pallier ces inconvénients, le déposant a donc recherché un procédé permettant d'atteindre la réduction de la présence du monoxyde et du dioxyde de carbone lors des opérations de co-traitement d'une charge issue de sources renouvelables et une charge d'origine pétrolière tout en assurant la production d'une coupe gazole et/ou kérosène d'excellente qualité.

Le procédé selon l'invention consiste à mélanger une charge issue de source renouvelable et une coupe pétrolière typiquement traitée en raffinerie. Les conditions requises pour réaliser la conversion des structures triglycérides et/ou acides gras contenues dans les charges issues de sources renouvelables étant généralement plus douces que celles requises pour désulfurer profondément les coupes d'origine pétrolière, et de préférence les coupes gazoles, la charge globale est envoyée dans une première zone réactionnelle d'hydrotraitement, où les réactions d'hydrogénation des insaturations des chaînes d'acides gras des triglycérides constituant la charge issue de source renouvelable ainsi que les réactions de désoxygénation et de préférence les réactions d'hydrodéoxygénations (HDO) sont majoritairement réalisées.

L'effluent liquide et gazeux issu de cette première zone réactionnelle, est ensuite introduit dans une seconde zone catalytique destinée à hydrotraiter ledit effluent, c'est à dire à hydrodésulfurer, à hydrodéazoter et à hydrogéner les composés aromatiques, de façon à amener l'effluent aux spécifications environnementales requises, à savoir en-dessous de 10 ppm poids de soufre. De préférence, la seconde zone catalytique est destinée essentiellement à l'hydrodésulfuration des composés soufrés présents. Or, la présence de monoxyde de carbone (CO) et de dioxyde de carbone ($CO_2$) produits lors des réactions de déoxygénation dans la première zone catalytique est un poison des catalyseurs d'hydrotraitement classiquement utilisés en hydrodésulfuration profonde. Nous avons découvert que l'utilisation d'un catalyseur particulier dans la première zone catalytique permettait de privilégier très fortement le schéma réactionnel selon la voie hydrodéoxygénation (HDO), ce qui a pour effet de diminuer très sensiblement la production de CO et de $CO_2$, et donc d'éviter une inhibition importante des réactions d'hydrotraitement ayant lieu dans la seconde zone catalytique.

La mise en oeuvre de cet enchaînement utilisant dans une première étape d'hydrotraitement un catalyseur d'hydrogénation et d'hydrodéoxygénation particulier privilégiant la voie HDO suivi d'une seconde étape d'hydrotraitement utilisant un catalyseur classique d'hydrodésulfuration, permet, du fait de l'absence de CO et de $CO_2$ formés dans la première étape, et par rapport à une mise en oeuvre sur catalyseur d'hydrotraitement classique :

- d'éviter la perte d'activité en HDS sur la seconde étape.
- d'éviter les phénomènes de corrosion, ce qui permet d'utiliser plus facilement les unités déjà existantes de raffinage. En effet, la présence de CO et de CO2 impliquerait d'utiliser des matériaux résistants à la corrosion, plus coûteux, et éventuellement de modifier assez sensiblement les unités existantes en raffinerie et donc d'augmenter le montant des investissements requis.
- d'améliorer le rendement en base carburant, puisque l'excellente sélectivité vers la voie hydrodéoxygénation (HDO) permet de former des paraffines de même nombre d'atomes de carbone que les chaînes d'acides gras présentes dans les charges issues de source renouvelable.
- de réduire l'importance de la section de purification du gaz de recycle. En effet, en présence de CO et de $CO_2$ formé dans la première zone réactionnelle, il conviendrait d'une part d'augmenter la taille de la section de lavage aux amines assurant la purification du gaz de recycle, de façon à éliminer l'$H_2S$ mais également le $CO_2$ et d'autre part de prévoir une section de méthanation ou de Water Gas Shift pour éliminer le CO ne pouvant être traité par lavage aux amines.

Résumé de l'invention

Plus précisément, l'invention concerne un procédé d'hydrotraitement en co-traitement de charges pétrolières, en mélange avec au moins une charge issue de sources renouvelables, pour produire des bases carburants (kérosène et/ou gazole) ayant une teneur en soufre inférieure à 10 ppm , ledit procédé comprenant les étapes suivantes :

a) une première étape d'hydrotraitement dans laquelle ladite charge passe dans au moins une première zone catalytique en lit fixe comprenant au moins un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095,
b) une seconde étape d'hydrotraitement dans laquelle l'effluent issu de la première étape d'hydrotraitement est directement envoyé, et dans laquelle ledit effluent passe dans au moins une seconde zone catalytique en lit fixe comprenant au moins un catalyseur d'hydrotraitement.

L'effluent issu de la première étape d'hydrotraitement est envoyé de préférence sans étape de séparation intermédiaire et de manière très préférée, sans étape de strippage intermédiaire.

Description de l'invention.

Conformément à l'invention, ledit procédé d'hydrotraitement traite un mélange de charges pétrolières, avec au moins une charge issue de sources renouvelables, pour produire des bases carburants.

Les charges pétrolières traitées dans le procédé d'hydrotraitement selon l'invention sont avantageusement des charges de type distillats moyens. Au sens de la présente description, le terme distillat moyen désigne des fractions hydrocarbonées ayant leur point d'ébullition dans la gamme d'environ 130°C à environ 410°C, généralement d'environ 140°C à environ 375°C et par exemple d'environ 150°C à environ 370°C et contenant au moins 0,01 % poids de soufre. Une charge de distillat moyen peut également comprendre une coupe gazole ou diesel, ou être désignée par l'une de ces appellations. Les gazoles de distillation directe ou provenant du craquage catalytique (LCO) ou d'un autre procédé de conversion (cokéfaction, viscoréduction, hydroconversion de résidu...) constituent une partie des charges typiques du procédé selon l'invention.

De préférence, les charges pétrolières sont choisies dans le groupe formé par les gazoles atmosphériques de distillation directe, les gazoles issus de procédés de conversion tels que par exemple ceux provenant du coking, d'une hydroconversion en lit fixe (tels que ceux issus des procédés HYVAHL®de traitement des lourds mis au point par la demanderesse) ou des procédés d'hydrotraitement des lourds en lit bouillonnant (tels que ceux issus des procédés H-OIL® ), ou encore les huiles désasphaltées au solvant (par exemple au propane, au butane, ou au pentane) venant du désasphaltage de résidu sous vide de distillation directe, ou de résidus issus des procédés de conversion des charges lourdes tels que par exemple HYVAHL® et H-OIL®. Les charges peuvent aussi avantageusement être formées par mélange de ces diverses fractions. Elles peuvent également avantageusement contenir des coupes gazoles légers ou kérosènes avec un profil de distillation d'environ 100°C à environ 370°C. Elles peuvent aussi avantageusement contenir des extraits aromatiques et des paraffines obtenus dans le cadre de la fabrication d'huiles lubrifiantes.

Les charges issues de sources renouvelables utilisées dans la présente invention sont avantageusement choisies parmi les huiles et graisses d'origine végétale ou animale, ou des mélanges de telles charges, contenant des triglycérides et/ou des acides gras libres et/ou des esters. Les huiles végétales peuvent avantageusement être brutes ou raffinées, totalement ou en partie, et issues des végétaux suivants : colza, tournesol, soja, palme, palmiste, olive, noix de coco, jatropha, cette liste n'étant pas limitative: Les huiles d'algues ou de poisson sont également pertinentes. Les huiles peuvent également être produites à partir d'organismes génétiquement modifiés. Les graisses animales sont avantageusement choisies parmi le lard ou les graisses composées de résidus de l'industrie alimentaire ou issus des industries de la restauration.

Ces charges contiennent essentiellement des structures chimiques de type triglycérides que l'homme du métier connait également sous l'appellation tri ester d'acides gras ainsi que des acides gras libres. Un tri ester d'acide gras est ainsi composé de trois chaînes d'acides gras estérifiées à une racine glycérol. Ces chaînes d'acide gras sous forme de tri ester ou sous forme d'acide gras libres, possèdent un nombre d'insaturations par chaîne, également appelé nombre de doubles liaisons carbone-carbone par chaîne, généralement compris entre 0 et 3 mais qui peut être plus élevé notamment pour les huiles issues d'algues qui présentent généralement un nombre d'insaturations par chaînes de 5 à 6.

Les molécules présentes dans les charges issues de sources renouvelables utilisées dans la présente invention présentent donc un nombre d'insaturations, exprimé par molécule de triglycéride, avantageusement compris entre 0 et 18. Dans ces charges, le taux d'insaturation, exprimé en nombre d'insaturations par chaîne grasse hydrocarbonée, est avantageusement compris entre 0 et 6. Les charges issues de sources renouvelables ont un indice d'iode de 0 à 600 généralement 5 à 200 et une teneur en oxygène de 5 à 20% et de préférence 8% et 13%. Les charges issues de sources renouvelables peuvent avoir des teneurs en azote comprises entre 1 ppm et 500 ppm poids.

Le mélange charge pétrolière conventionnelle et charge issue d'une source renouvelable peut avantageusement être constitué de 1 à 99% poids de bàses pétrolières et de 99 à 1% poids d'huiles d'origine végétale ou animale et de manière préférée de 60 à 99% en poids de charge pétrolière conventionnelle et de 1 à 40% poids d'huiles d'origine végétale ou animale et de manière très préférée, de 70 à 99% en poids de charge pétrolière conventionnelle et de 1 à 30% poids d'huiles d'origine végétale ou animale.

Les bases gazoles produites selon l'invention sont d'excellente qualité :

- elles présentent une faible teneur en soufre c'est à dire inférieure à 10 ppm poids, et la teneur en diaromatiques + est inférieure à 2% poids
- elles possèdent un excellent indice de cétane supérieur à 51, de préférence supérieur à 55.
- elles présentent de bonnes propriétés de tenue à froid.
- la densifé obtenue est basse, généralement comprise entre 825 et 845 kg/m3.

Description détaillée de l'invention.

Conformément à l'invention, le procédé d'hydrotraitement met en oeuvre un mélange de charges pétrolières

avec au moins une charge issue de sources renouvelables dans une première étape d'hydrotraitement dans laquelle ladite charge passe dans au moins une première zone catalytique en lit fixe comprenant au moins un catalyseur particulier réalisant les réactions d'hydrogénation des insaturations des chaînes d'acides gras des triglycérides constituant le charge issue de source renouvelable ainsi que les réactions de désoxygénation et de préférence les réactions d'hydrodéoxygénation (HDO) suivie d'une seconde étape d'hydrotraitement dans laquelle l'effluent issu de la première étape d'hydrotraitement est directement envoyé, et de préférence sans étape de séparation intermédiaire et de manière très préférée, sans étape de strippage intermédiaire, et dans laquelle ledit effluent passe dans au moins une seconde zone catalytique en lit fixe comprenant au moins un catalyseur d'hydrotraitement, réalisant de préférence l'hydrodésulfuration.

Lors de l'hydrotraitement (HDT), les réactions subies par la charge globale constituée du mélange de charges pétrolières et d'au moins une charge issue de source renouvelable sont les suivantes:

- la réaction d'hydrogénation des insaturations des chaînes insaturées des acides gras des triglycérides et esters constitutifs de la charge issue de sources renouvelables.
- les réactions de déoxygénation qui se décomposent en :

  - la réaction de décarbonylation qui représente l'ensemble des réactions permettant d'enlever un oxygène et un carbone d'un groupement carboxylique en formant du monoxyde de carbone (CO).
  - la réaction de décarboxylation qui représente l'ensemble des réactions permettant d'enlever un groupement carboxyle d'un groupement carboxylique en formant du dioxyde de carbone ($CO_2$)
  - la réaction d'hydrodéoxygénation (HDO) qui correspond aux réactions aboutissant à la formation d'eau en présence d'hydrogène.

- la réaction d'hydrodésulfuration (HDS), par laquelle on désigne les réactions permettant d'enlever le soufre de la charge pétrolière avec production d'$H_2S$.
- la réaction d'hydrodéazotation (HDN), par laquelle on désigne les réactions permettant d'enlever l'azote de la charge pétrolière avec production de $NH_3$.
- la réaction d'hydrogénation des composés aromatiques, par laquelle on désigne la conversion de composés aromatiques de la charge pétrolière en composés naphatèniques et naphténoaromatiques.

Chaque étape peut comprendre un ou plusieurs réacteurs, une ou plusieurs zones (ou lits) catalytiques. Il est ainsi possible d'adapter les conditions de traitement dans chacune des unités et/ou zones de manière à séparer les réactions ayant lieu dans les différentes unités et/ou zones. Ainsi l'hydrotraitement du mélange de charges issues de sources renouvelables et d'hydrocarbures peut s'effectuer à plus basse température et moindre pression que les réactions d'hydrotraitement, hydrodésulfuration, hydrodéazotation et les réactions d'hydrogénation des composés aromatiques.

### Etape 1) - hydrotraitement de la charge globale

La charge issue de source renouvelable et la charge pétrolière, de préférence chaude sont avantageusement mélangées.

De préférence, les conditions de températures du flux en entrée dans la première zone catalytique de la première étape d'hydrotraitement a) du procédé selon l'invention sont ajustées par l'ajout de la charge pétrolière préalablement chauffée. La température du flux entrant dans la première zone catalytique de la première étape d'hydrotraitement a), ledit flux étant constitué du mélange de la charge issue de source renouvelable et de la charge pétrolière est avantageusement compris entre 150 et 260°C et de préférence entre 180 et 220 °C et de manière très préférée entre 180 et 210°C. Ces conditions de température dudit flux entrant permettent d'amorcer la réaction d'hydrogénation des insaturations des triglycérides contenus dans la charge issue de source renouvelable, tout en contrôlant l'exothermie de ces réactions. Ainsi, la variation de température entre ledit flux entrant et l'effluent sortant la première zone catalytique est avantageusement limitée de sorte que la température de l'effluent sortant de la première zone catalytique soit avantageusement comprise entre 280 et 370°C, de préférence entre 280 et 330°C et de manière plus préférée supérieure à 300°C.

Ce principe permet ainsi d'opérer à température réduite en tête de la première zone catalytique de la première étape d'hydrotraitement a) et donc d'abaisser globalement le niveau moyen de température de la zone réactionnelle ce qui favorise les réactions d'hydrodéoxygénation donc le rendement en base gazole.

Dans le cas ou la première étape d'hydrotraitement a) met en oeuvre plus d'une zone catalytique et de préférence au moins deux zones catalytiques, les températures des flux entrant et sortant des zones catalytiques suivants la première, sont compris dans les gammes définies pour la première zone catalytique, de préférence grâce à la mise en oeuvre:

- soit d'un flux constitué de charge issue de source renouvelable ou de charge globale constituée d'un mélange de charges pétrolières et d'au moins une charge issue de source renouvelable,
- soit d'un flux de l'effluent hydrotraité issu des étape a) ou b) d'hydrotraitement, à un taux de recycle compris entre 1:10 et 8:1,

la température du flux étant comprise entre 20 et 100°C. Ceci permet de gérer l'exothermie dans les différentes zones catalytiques et donc l'augmentation de température.

Le préchauffage de la charge contenant au moins la charge pétrolière peut se faire par tous les moyens connus de l'homme du métier avant son introduction dans la première étape d'hydrotraitement. Sans limiter la portée de l'invention, on peut mentionner l'emploi d'échangeurs de chaleur et/ou de four de préchauffe.

Le mélange entre la charge issue de source renouvelable et la charge pétrolière peut intervenir à différents endroits du schéma de procédé.

Une première possibilité consiste à injecter la charge issue de source renouvelable après préchauffage de la charge pétrolière par passage en présence d'hydrogène par un échangeur charge-effluent puis dans un four de préchauffe.

Une seconde méthode consiste à mélanger la charge pétrolière et la charge issue de source renouvelable en présence d'hydrogène après préchauffage de la charge pétrolière par passage par un échangeur charge-effluent issu de la première zone. Dans ce cas, le mélange des charges pétrolières et de la charge issue de source renouvelable peut éventuellement être complété par passage dans un four de préchauffe.

Enfin, le mélange entre la charge issue de source renouvelable et la charge pétrolière peut intervenir en présence d'hydrogène avant chauffage, auquel cas, le mélange voit sa température augmenter tout d'abord par passage par un échangeur charge-effluent puis éventuellement par un four de préchauffe.

Le mélange des charges peut également être fait préalablement à l'introduction d'hydrogène ou a posteriori. De manière préférée, le mélange de la charge issue de source renouvelable avec la charge pétrolière intervient en présence d'hydrogène que ce soit avant l'échangeur charge-effluent, avant le four de préchauffe ou avant l'entrée dans le réacteur. De manière très préférée, le mélange de la charge issue de source renouvelable avec la charge pétrolière intervient en présence d'hydrogène après élévation de la température de la charge pétrolière par au moins une étape de chauffage.

Dans le cas ou la deuxième étape d'hydrotraitement b) met en oeuvre plus d'une zone catalytique et de préférence au moins deux zones catalytiques, une injection de charge pétrolières peut avantageusement être mise en oeuvre dans chaque zone catalytique de ladite deuxième étape d'hydrotraitement b).

Le mélange charge pétrolière conventionnelle et charge issue d'une source renouvelable peut avantageusement être constitué de 1 à 99% poids de bases pétrolières et de 99 à 1% poids de charge issue de source renouvelable et de manière préférée de 60 à 99% en poids de charge pétrolière conventionnelle et de 1 à 40% poids de charge issue de source renouvelable et de manière très préférée, de 70 à 99% en poids de charge pétrolière conventionnelle et de 1 à 30% poids de charge issue de source renouvelable.

Selon un premier mode de réalisation préféré, dans le cas ou le mélange charge pétrolière conventionnelle et charge issue d'une source renouvelable est constitué de 60 à 99% en poids de charge pétrolière conventionnelle et de 1 à 40% poids de charge issue de source renouvelable et de manière très préférée, de 70 à 99% en poids de charge pétrolière conventionnelle et de 1 à 30% poids de charge issue de source renouvelable, aucun recycle de l'effluent liquide hydrotraité issu du procédé selon l'invention n'est mis en place pour la gestion de l'exothermie des réactions d'hydrodéoxygénation.

En effet, du fait de la chaleur dégagée par les exothermes des réactions d'hydrogénation des insaturations et de déoxygénation et de la proportion de la charge issue de source renouvelable dans la charge globale, l'effluent issu de la première étape d'hydrotraitement a) et constituant la charge de la deuxième étape d'hydrotraitement b), atteint avantageusement la température requise pour entrer dans la seconde étape d'hydrotraitement b), soit une température comprise entre 280 et 370°C, de préférence entre 280 et 330°C et de manière plus préférée supérieure à 300°C de manière à permettre en particulier, les réactions d'hydrodésulfuration, sans qu'aucun recycle de l'effluent liquide hydrotraité ne soit nécessaire. Cette mise en oeuvre permet en outre, de ne pas dépasser les températures entraînant des risques de formations de coke dans la première étape de déoxygénation soit des température supérieures à 350°C.

Selon un deuxième mode de réalisation préféré, dans le cas ou le mélange charge pétrolière conventionnelle et charge issue d'une source renouvelable est constitué de 40 à 99% poids de charge issue de source renouvelable et de 1 à 60% poids de bases pétrolières, un recycle de l'effluent liquide hydrotraité issu du procédé selon l'invention est mis en place pour la gestion de l'exothermie des réactions d'hydrogénation des insaturations et de déoxygénation de la charge issue de source renouvelable à un taux de recycle avantageusement compris entre 1:10 et 8:1. Le but de cette mise en oeuvre est également de maintenir le niveau d'hydrogène dissous en phase liquide ceci afin de favoriser les réactions d'hydrodéoxygénation, de limiter les formations de coke sur le catalyseur et les phénomènes de polymérisations des composés oxygénés. La quantité de recycle mise en oeuvre est telle que la chaleur dégagée lors des réactions d'hydrogénation et de déoxygénation permettent de ne pas dépasser en sortie de la première étape d'hydrotraitement a) dite étape de hydrodéoxygénation, la température requise pour entrer dans la seconde étape d'hydrotraitement b), soit une température comprise entre 280 et 370°C, de préférence entre 280 et 330°C et de manière plus préférée supérieure à 300°C de manière à permettre en particulier, les réactions d'hydrodésulfuration.

Dans ce deuxième mode de réalisation préféré et dans le cas ou la première étape d'hydrotraitement met en oeuvre plus d'une zone catalytique et de préférence au moins deux zones catalytiques, une injection d'un flux à une température comprise entre 20 et 100°C, constitué de charge issue de source renouvelable ou de charge globale constituée d'un mélange de charges pétrolières et d'au moins une charge issue de source renouvelable, peut également avantageusement être mise en oeuvre dans chaque zone catalytique suivant la première zone catalytique de la première étape d'hydrotraitement a), de manière à gérer l'exothermie dans les différentes zones catalytiques et donc l'augmentation de température.

Ainsi, la température du flux entrant dans chaque zone catalytique suivant la première zone catalytique dans la première étape d'hydrotraitement a), est toujours avantageusement comprise entre compris 150 et 260°C et de préférence entre 180 et 220 °C et de manière très préférée entre 180 et 210°C.

Avantageusement, préalablement à la première étape d'hydrotraitement a), la charge globale peut être prétraitée ou pré-raffinée de façon à éliminer, par un traitement approprié, des contaminants présents naturellement dans les charges issues de source renouvelable tels que les métaux alcalins, alcalino-terreux, et métaux de transition ainsi que l'azote. Des traitements appropriés peuvent par exemple être des traitements thermiques et/ou chimiques bien connus de l'homme du métier et de préférence la mise en oeuvre d'un lit de garde avantageusement situé dans le même réacteur ou dans un réacteur différent de celui mis en oeuvre pour l'étape d'hydrotraitement du procédé selon l'invention. Les catalyseurs de lit de garde sont connus de l'homme du métier.

Conformément à l'invention, la charge globale, éventuellement préalablement pré-traitée, subit la première étape d'hydrotraitement a) dans laquelle ladite charge passe dans au moins une première zone catalytique en lit fixe comprenant au moins un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095.

On appelle phase active, la phase contenant le ou les éléments sous forme sulfure des groupes des métaux, en l'occurrence la phase active du catalyseur utilisée dans la première étape d'hydrotraitement a) est constituée d'au moins un élément sulfuré du groupe VIB et d'au moins un élément sulfuré du groupe VIII.

Conformément à la présente invention, le catalyseur mis en oeuvre dans le procédé selon l'invention peut être supporté c'est à dire qu'il comporte un support minéral amorphe choisi dans le groupe formé par l'alumine, la silice, les silices-alumines, la magnésie, les argiles et les mélanges d'au moins deux de ces minéraux. Ce support peut également avantageusement renfermer d'autres composés tels que par exemple des oxydes choisis dans le groupe formé par l'oxyde de bore, la zircone, l'oxyde de titane, l'anhydride phosphorique.

De manière préférée, le support minéral amorphe est un support alumine ($\eta$, $\delta$ ou $\gamma$). Conformément à la présente invention, ledit catalyseur mis en oeuvre dans le procédé selon l'invention peut alternativement être massique, c'est à dire sans support.

Conformément au procédé selon l'invention, la phase active dudit catalyseur sous forme supporté ou massique est constituée d'au moins un élément du groupe VIB et d'au moins un élément du groupe VIII, ledit élément du groupe VIB étant choisi parmi le molybdène et le tungstène et de préférence, ledit élément du groupe VIB est le molybdène et ledit élément du groupe VIII est choisi parmi le nickel et le cobalt et de préférence ledit élément du groupe VIII est le nickel.

Conformément au procédé selon l'invention, le rapport atomique du métal (ou métaux) du groupe VIII sur métal (ou métaux) du groupe VIB, étant strictement supérieur à 0 et inférieur à 0,095, de préférence compris entre 0,01 et 0,08, de manière préférée entre 0,01 et 0,05 et de manière très préférée entre 0,01 et 0,03.

De préférence, le métal du groupe VIB est le molybdène et le métal du groupe VIII est le nickel et le rapport atomique du métal du groupe VIII sur métal du groupe VIB, c'est à dire le rapport atomique Ni/Mo, est strictement supérieur à 0 et inférieur à 0,095, de préférence compris entre 0,01 et 0,08, de manière préférée entre 0,01 et 0,05 et de manière très préférée entre 0,01 et 0,03.

Dans le cas où ledit catalyseur est sous forme supportée, la teneur en oxyde d'élément du groupe VIB est avantageusement comprise entre 1 % et 30 % poids par rapport à la masse totale du catalyseur, de préférence comprise entre 10 et 25 % poids, de manière très préférée entre 15 % et 25 % poids et de manière encore plus préférée entre 17 et 23% poids et la teneur en oxyde d'élément du groupe VIII est avantageusement strictement supérieure à 0 % et inférieure à 1,5 % poids par rapport à la masse totale du catalyseur, de préférence comprise entre 0,05 % et 1,1 % poids, de manière très préférée entre 0,07 % et 0,65 % poids et de manière encore plus préférée entre 0,08 et 0,36% poids.

La valeur minimale du rapport atomique Ni/Mo égal à 0,01, pour une teneur en oxyde de molybdène de 1 % poids, dans le cadre de l'invention, correspond à une teneur en nickel de 50 ppm poids, détectable par les techniques usuelles d'analyse élémentaire par ICP (Inductively coupled plasma ou selon la terminologie française par plasma inductif), ladite limite de détection du nickel étant de l'ordre du ppm.

Dans le cas où ledit catalyseur est sous forme massique, les teneurs en oxyde des éléments des groupes VIB et VIII sont définies par les rapports atomiques du métal (ou métaux) du groupe VIII sur métal (ou métaux) du groupe VIB définis selon l'invention.

Pour un rapport atomique du métal (ou métaux) du groupe VIII sur métal (ou métaux) du groupe VIB strictement supérieur à 0 et inférieur à 0,095, la teneur en élément du groupe VIB est avantageusement supérieure à 95,3% et strictement inférieure à 100% poids en équivalent oxyde de l'élément du groupe VIB et la teneur en élément du groupe VIII est avantageusement strictement supérieur à 0 et inférieure à 4,7% poids en équivalent oxyde de l'élément du groupe VIII.

Pour un rapport atomique du métal (ou métaux) du groupe VIII sur métal (ou métaux) du groupe VIB compris entre 0,01 et 0,08, la teneur en élément du groupe VIB est avantageusement comprise entre 96 et 99,4% poids en équivalent oxyde de l'élément du groupe VIB et la teneur en élément du groupe VIII est avantageusement comprise entre 0,6 et 4% poids en équivalent oxyde de l'élément du groupe VIII.

Pour un rapport atomique du métal (ou métaux) du groupe VIII sur métal (ou métaux) du groupe VIB compris entre 0,01 et 0,05, la teneur en élément du groupe VIB est avantageusement comprise entre 97,4 et 99,4% poids en équivalent oxyde de l'élément du groupe VIB et la teneur en élément du groupe VIII est avantageusement comprise entre 0,6 et 2,6% poids en équivalent oxyde de l'élément du groupe VIII.

Pour un rapport atomique du métal (ou métaux) du groupe VIII sur métal (ou métaux) du groupe VIB compris entre 0,01 et 0,03, la teneur en élément du groupe VIB est avantageusement comprise entre 98,4 et 99,4% poids en équivalent oxyde de l'élément du groupe VIB et la teneur en élément du groupe VIII est avantageusement comprise entre 0,6 et 1,6% poids en équivalent oxyde de l'élément du groupe VIII.

Le catalyseur utilisé dans le procédé selon l'invention peut également avantageusement contenir au moins un élément dopant afin d'atteindre un niveau de conversion élevé tout en maintenant une sélectivité de réaction pour la voie d'hydrodésoxygénation (HDO). La phase active dans le cas où ledit catalyseur est sous forme massique et/ou le support dans le cas où ledit catalyseur est sous forme supportée peuvent donc également avantageusement contenir au moins un élément dopant choisi parmi le phosphore, le fluor et le bore et de préférence, l'élément dopant est le phosphore. Il est connu de l'homme de l'art que ces éléments ont des effets indirect sur l'activité catalytique : une meilleure dispersion de la phase active sulfurée et une augmentation de l'acidité du catalyseur favorable aux réactions d'hydrotraitement (Sun et al, Catalysis Today 86(2003) 173).

Ledit élément dopant peut être introduit dans la matrice ou être déposé sur le support. On peut également avantageusement déposer du silicium sur le support, seul ou avec le phosphore et/ou le bore et/ou le fluor.

La teneur en élément dopant, de préférence en phosphore est avantageusement strictement supérieure à 1% et inférieure à 8 % poids d'oxyde $P_2O_5$ par rapport à la masse totale du catalyseur et de préférence supérieure à 1,5% et inférieure à 8% et de manière très préférée supérieure à 3% et inférieure à 8% poids.

L'utilisation du catalyseur décrit ci dessus dans le procédé selon l'invention permet de limiter la formation d'oxyde de carbone pour les raisons évoquées précédemment en limitant les réactions de décarboxylation / décarbonylation.

Dans le cadre de la présente invention, il est ainsi possible d'obtenir une sélectivité en hydrodéoxygénation (HDO) dans la première étape d'hydrotraitement a), avantageusement supérieur ou égale à 90% et de préférence supérieur ou égale à 95% et de manière préférée, supérieure ou égale à 96 %.

La sélectivité par décarboxylation/décarbonylation de la charge issue de sources renouvelables est avantageusement limitée à au plus 10%, et de préférence limitée à au plus 5% et de manière plus préférée à au plus 4% dans la première étape d'hydrotraitement a).

La sélectivité en hydrodéoxygénation (HDO) est calculée de la manière suivante :

Si on note $R_{DCO}$ le rendement théorique en $CO+CO_2$ pour une charge issue de source renouvelable donnée, qui se transforme exclusivement selon la voie décarboxylation (DCO), exprimé en pourcentage poids par rapport à la charge, et R le rendement en $CO + CO_2$ obtenu expérimentalement lors de l'hydrotraitement d'une charge issue de source renouvelable pure, alors on définit $S_{HDO}$ comme étant la sélectivité en HDO par l'équation simple suivante.

$$S_{hydro} = 100 * (R_{DCO} - R)/R_{DCO}$$

Il a ainsi été mis en évidence qu'il était possible de contrôler la sélectivité des réactions d'hydrodésoxygénation de charges issues de sources renouvelables et de minimiser les réactions de décarboxylation/décarbonylation en fonction de la nature de la phase active et plus particulièrement en fonction du rapport atomique du métal (ou métaux) du groupe VIII sur métal (ou métaux) du groupe VIB de ladite phase active.

De manière surprenante, l'utilisation d'un catalyseur présentant un rapport atomique du métal (ou métaux) du groupe VIII sur métal (ou métaux) du groupe VIB de ladite phase active et en particulier l'utilisation d'un rapport atomique Ni/Mo strictement supérieur à 0 et inférieur à 0,095 permet de contrôler et d'augmenter la sélectivité pour les réactions d'hydrodésoxygénation et ainsi de limiter les réactions de décarboxylation / décarbonylation et donc de limiter les inconvénients engendrés par la formation d'oxydes de carbone.

Par ailleurs, l'augmentation de la teneur en élément du groupe VIII et en particulier en nickel tend à favoriser la réaction de décarboxylation / décarbonylation, même si la réaction d'hydrodésoxygénation reste majoritaire. Ainsi, il a été mis en évidence que la sélectivité en hydrodésoxygénation est optimale en particulier pour des valeurs du rapport atomique Ni/Mo comprise entre 0,01 et 0,03.

Dans le cas de l'utilisation de catalyseur supporté dans le procédé selon l'invention, la fonction hydrogénante peut être introduite sur ledit catalyseur par toute méthode connue de l'homme du métier comme par exemple le comalaxage ou l'imprégnation à sec et la sulfuration est ensuite effectuée in-situ ou ex-situ selon une méthode connue de l'homme du métier.

Dans le cas de l'utilisation de catalyseur massique dans le procédé selon l'invention, ledit catalyseur est préparé selon des méthodes connues de l'homme du métier telles que par exemple la décomposition de thiosels métalliques.

Dans le cas où la première étape d'hydrotraitement a) comporte au moins deux zones catalytiques, lesdites zones catalytiques peuvent utiliser des catalyseurs identiques ou différents et de préférence, lesdits catalyseurs sont identiques.

L'utilisation d'un tel catalyseur dans la première étape d'hydrotraitement a) permet donc l'obtention d'une sélectivité élevée pour les réactions d'hydrodéoxygénation (HDO) et permet de limiter les réactions de décarboxylation / décarbonylation (DCO) et ainsi de limiter les inconvénients engendrés par la formation d'oxydes de carbone.

De plus le co-traitement de la charge issue de source renouvelable avec une charge pétrolière permet de mieux contrôler les exothermes lors des réactions d'hydrogénation des insaturations des chaînes hydrocarbonées d'acides gras des triglycérides et d'HDO. Ceci permet de limiter la mise en oeuvre de recycle. De plus le gradient thermique est avantageusement utilisé pour amener l'effluent issu de la première étape d'hydrotraitement qui constitue la charge de la deuxième étape d'hydrotraitement, à la température requise pour l'entrée dans la deuxième étape d'hydrotraitement et permettre en particulier le démarrage des réactions d'hydrodésulfuration. La température de l'effluent issu de la première étape d'hydrotraitement a) constituant la charge de la deuxième étape d'hydrotraitement b) est donc avantageusement comprise entre 280 et 340°C et de préférence entre 280 et 320°C et de manière préférée une température supérieure à 300°C de manière à permettre en particulier, les réactions d'hydrodésulfuration.

La première étape d'hydrotraitement a) opère avantageusement à une température comprise entre 120 et 450°C, de préférence entre 120 et 350°C, de manière préférée entre 150 et 320°C, et de manière encore plus préférée entre 180 et 310°C à une pression comprise entre 1 MPa et 10 MPa, de manière préférée entre 1 MPa et 6 MPa, à une vitesse spatiale horaire est comprise entre 0,1 $h^{-1}$ et 10 $h^{-1}$ et de préférence comprise entre 0,2 et 5 $h^{-1}$, et à un rapport hydrogène/charge est compris entre 50 et 3000 $Nm^3$ d'hydrogène/$m^3$ de charge, de préférence entre 70 et 2000 $Nm^3$ d'hydrogène/$m^3$ de charge et de manière préférée compris entre 150 et 1500 $Nm^3$ d'hydrogène/$m^3$ de charge.

Le procédé selon l'invention offre l'éventuelle possibilité, afin de limiter l'inhibition du système catalytique en première étape d'hydrodésoxygénation par la production de d'eau et la dilution de l'hydrogène par l'eau et le propane formés, d'opérer le premier réacteur à contre-courant pour l'introduction d'hydrogène. En effet, le procédé étant en lit fixe, il existe un gradient de concentration des gaz produits vers le bas du réacteur. L'introduction d'hydrogène à contre-courant permet une meilleure activité du catalyseur en augmentant le ratio $H_2$/HC.

La première étape d'hydrotraitement a) est donc avantageusement majoritairement le lieu de l'hydrogénation des insaturations des chaînes d'acides gras des triglycérides et de l'hydrodéoxygénation de charge issue de source renouvelable.

La seconde étape d'hydrotraitement b) est majoritairement le lieu des réactions d'hydrodésulfuration, d'hydrodéazotation et hydrogénation des composés aromatiques et majoritairement des réactions d'hydrodésulfuration de la charge pétrolière.

La seconde étape d'hydrotraitement b) dite étape d'hydrodésulfuration opère dans des conditions plus sévères que la première étape d'hydrotraitement a) dite zone d'hydrodéoxygénation.

Etape 2) Hydrotraitement de l'effluent issu de la première étape d'hydrotraitement.

L'effluent hydrodéoxygéné issu de l'étape a) d'hydrotraitement est ensuite directement envoyé, de préférence sans étape de séparation intermédiaire et de manière préférée, sans étape de strippage intermédiaire dans la deuxième étape d'hydrotraitement.

Du fait du gradient de température dans l'étape a) d'hydrotraitement, l'effluent issu de la première étape d'hydrotraitement a) constituant la charge de la seconde étape d'hydrotraitement b) sort de ladite première étape à une température avantageusement comprise entre 280 et 370°C, de préférence entre 280 et 330°C et de manière plus préférée supérieure à 300°C et est ensuite directement injecté dans au moins une et de préférence au moins deux zones catalytiques comprenant au moins un catalyseur d'hydrotraitement.

Le gradient thermique est donc avantageusement utilisé pour chauffer l'effluent issu de la première étape d'hydrotraitement a) à la température requise pour l'entrée dans la deuxième étape d'hydrotraitement b) et permettre en particulier le démarrage des réactions d'hydrodésulfuration.

Le catalyseur d'hydrotraitement utilisé dans la deuxième étape d'hydrotraitement b) du procédé selon l'invention comprend avantageusement une fonction hydro-déshydrogénante et un support. De préférence, le support est choisi dans le groupe formé par l'alumine, la silice, les silices-alumines, la magnésie, les argiles et les mélanges d'au moins deux de ces minéraux. Ce support peut également avantageusement renfermer d'autres composés et par exemple des oxydes choisis dans le groupe formé par l'oxyde de bore, la zircone, l'oxyde de titane, l'anhydride phosphorique. De manière préférée, le support est constitué d'alumine et de manière très préférée d'alumine η, δ ou γ.

Ladite fonction hydrogénante du catalyseur utilisé dans la deuxième étape d'hydrotraitement b) du procédé selon l'invention comprend avantageusement au moins un métal du groupe VIII et/ou au moins un métal du groupe VI B.

De préférence, ledit catalyseur comprend avantageusement au moins un métal du groupe VIII choisi parmi le nickel et le cobalt et au moins un métal du groupe VIB choisi parmi le molybdène et le tungstène.

De préférence, l'élément du groupe VIII est le nickel et l'élément du groupe VIB est le molybdène et ledit catalyseur comprend une teneur en oxyde de nickel comprise entre 0,5 et 10 % poids et de préférence entre 1 et 5 % poids et une teneur en trioxyde de molybdène comprise entre 1 et 30 % poids et de préférence entre 5 et 25 % poids, sur un support minéral amorphe alumine, les pourcentages étant exprimés en % poids par rapport à la masse totale du catalyseur.

De préférence, le catalyseur d'hydrotraitement utilisé dans la seconde étape d'hydrotraitement b) présente un rapport atomique Ni/Mo supérieur à 0,1.

Ledit catalyseur utilisé dans la deuxième étape d'hydrotraitement b) du procédé selon l'invention peut également avantageusement contenir au moins un élément choisi parmi le phosphore et le bore. Cet élément peut être avantageusement introduit dans la matrice ou de préférence être déposé sur le support. On peut également avantageusement déposer du silicium sur le support, seul ou avec le phosphore et/ou le bore et/ou le fluor.

La teneur en poids d'oxyde dudit élément est habituellement avantageusement inférieure à 20 % et de manière préférée inférieure à 10 % et elle est habituellement avantageusement d'au moins 0,001 %.

Les métaux des catalyseurs utilisés dans la deuxième étape d'hydrotraitement b) du procédé selon l'invention sont avantageusement des métaux sulfurés ou des phases métalliques.

Dans le cas ou la deuxième étape d'hydrotraitement b) comporte au moins deux zones catalytiques, lesdites zones catalytiques peuvent utiliser des catalyseurs identiques ou différents.

L'étape b) d'hydrotraitement opère avantageusement à une température comprise entre 250 et 450°C et de préférence entre 300 et 400°C, à une pression totale de 0,5 à 30 MPa (de façon préférée entre 1 et 25 MPa), une vitesse volumique horaire de 0,1 à 20 $h^{-1}$ (de façon préférée entre 0,2 et 4 $h^{-1}$), un rapport hydrogène/charge exprimé en volume d'hydrogène, mesuré dans les conditions normales de température et pression, par volume de charge liquide généralement de 50 NI/I à 2000 NI/I.

Dans le but de produire un carburant gazole présentant des propriétés améliorées, l'effluent hydrocarboné est ensuite traité selon les étapes optionnelles suivantes :

L'effluent hydrotraité issu du procédé selon l'invention subit ensuite au moins une étape de séparation et de préférence une étape de séparation gaz/liquide éventuellement suivie d'une séparation de l'eau et d'au moins une base hydrocarbonée liquide, lesdites étapes étant optionnelles et pouvant être mises en oeuvre dans un ordre indifférent l'une par rapport à l'autre.

De préférence, l'effluent hydrotraité issu du procédé selon l'invention subit d'abord une étape de séparation gaz/liquide. Le but de cette étape est de séparer les gaz du liquide, et notamment, de récupérer les gaz riches en hydrogène pouvant contenir également des gaz tels que l'$H_2S$, des traces de CO et de $CO_2$, et le propane et au moins un effluent liquide, lesdits gaz pouvant avantageusement être également purifiés par des méthodes connues de l'homme du métier.

De préférence, l'effluent liquide issu de la séparation gaz/liquide optionnelle précédente subit ensuite une séparation d'au moins une partie et de préférence la totalité de l'eau formée, d'au moins une base hydrocarbonée liquide, l'eau étant produite lors des réactions d'hydrodésoxygénation ayant lieu lors de la première étape d'hydrotraitement a) du procédé selon l'invention.

Le but de cette étape est de séparer l'eau de l'effluent hydrocarboné liquide. On entend par élimination de l'eau, l'élimination de l'eau produite par les réactions d'hydrodésoxygénation (HDO). L'élimination plus ou moins complète de l'eau est avantageusement fonction de la tolérance à l'eau du catalyseur d'hydroisomérisation utilisé dans l'étape optionnelle suivante du procédé selon l'invention. L'élimination de l'eau peut être réalisée par toutes les méthodes et techniques connues de l'homme du métier, telles que par exemple par séchage, passage sur un dessicant, flash, extraction par solvant, distillation et décantation ou par association d'au moins deux de ces méthodes.

Au moins une partie de l'effluent liquide hydrotraité, ayant éventuellement subi une étape d'élimination d'eau, peut avantageusement être recyclé en tête de chaque zone catalytique de l'étape d'hydrotraitement a) suivant la première zone catalytique et/ou en tête de chaque zone catalytique de la deuxième étape d'hydrotraitement b) dans le cas ou le mélange charge pétrolière conventionnelle et charge issue d'une source renouvelable est constitué de 40 à 99% poids de charge issue de source renouvelable et de 1 à 40% poids de bases pétrolières.

Au moins une partie de l'effluent gazeux riche en hydrogène issu de l'étape optionnelle de séparation et ayant subi de préférence un traitement de purification visant à déconcentrer les impuretés issues des réactions présentes dans l'effluent gazeux au moment de l'étape de séparation, peut avantageusement être injecté soit en mélange avec au moins une partie de l'effluent liquide hydrotraité issu de l'étape de séparation dans le cas ou un recylcle de l'effluent liquide hydrotraité est prévu, soit séparément, en tête de chaque zone catalytique des étapes a) et b) d'hydrotraitement.

L'étape de séparation peut avantageusement être mise en oeuvre par toute méthode connue de l'homme du métier telle que par exemple la combinaison de un ou plusieurs séparateurs haute et/ou basse pression, et/ou d'étapes de distillation et/ou de strippage haute et/ou basse pression.

Etape 3): Hydroisomérisation de l'effluent hydrotraité

L'effluent liquide hydrotraité issu du procédé selon l'invention est essentiellement constitué de n-paraffines qui peuvent être incorporées au pool gazole. De manière à améliorer les propriétés à froid de cet effluent liquide hydrotraité, une étape d'hydroisomérisation est nécessaire pour transformer les n-paraffines en paraffines branchées présentant de meilleures propriétés à froid.

Au moins une partie de l'effluent liquide hydrotraité et de préférence la totalité, ayant éventuellement subi une étape de séparation ci dessus, subit ensuite une étape optionnelle d'hydroisomérisation en présence d'un catalyseur d'hydroisomérisation sélective.

L'étape d'hydroisomérisation est avantageusement mise en oeuvre dans un réacteur séparé. Les catalyseurs d'hydroisomérisation utilisés sont avantageusement de type bifonctionnels, c'est-à-dire qu'ils possèdent une fonction hydro/déshydrogénante et une fonction hydroisomérisante.

Ledit catalyseur d'hydroisomérisation comprend avantageusement au moins un métal du groupe VIII et/ou au moins un métal du groupe VIB en tant que fonction hydrodéshydrogénante et au moins un tamis moléculaire ou un support minéral amorphe en tant que fonction hydroisomérisante.

Ledit catalyseur d'hydroisomérisation comprend avantageusement soit au moins un métal noble du groupe VIII de préférence choisi parmi le platine ou le palladium, actifs sous leur forme réduite, soit au moins un métal du groupe VIB, de préférence choisi parmi le molybdène ou le tungstène, en combinaison avec au moins un métal non noble du groupe VIII, de préférence choisi parmi le nickel et le cobalt, utilisés de préférence sous leur forme sulfurée.

De préférence, ledit catalyseur d'hydroisomérisation comprend au moins un métal du groupe VIB, de préférence choisi parmi le molybdène ou le tungstène, en combinaison avec au moins un métal non noble du groupe VIII, de préférence choisi parmi le nickel et le cobalt, utilisés de préférence sous leur forme sulfurée.

De manière très préférée, l'élément du groupe VIB est le molybdène et le métal non noble du groupe VIII est le nickel.

Dans le cas où le catalyseur d'hydroisomérisation comprend au moins un métal noble du groupe VIII, la teneur totale en métal noble du catalyseur d'hydroisomérisation est avantageusement comprise entre 0,01 et 5% en poids par rapport au catalyseur fini, de manière préférée entre 0,1 et 4% en poids et de manière très préférée entre 0,2 et 2% en poids.

De préférence, le catalyseur d'hydroisomérisation comprend le platine ou le palladium et de manière préférée, le catalyseur d'hydroisomérisation comprend le platine.

Dans le cas où le catalyseur d'hydroisomérisation comprend au moins un métal du groupe VIB en combinaison avec au moins un métal non noble du groupe VIII, la teneur en métal du groupe VIB du catalyseur d'hydroisomérisation est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids.

La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange.

Selon un mode de réalisation préféré, ledit catalyseur d'hydroisomérisation comprend au moins un support minéral amorphe en tant que fonction hydroisomérisante, ledit un support minéral amorphe étant choisi parmi les silice-alumines et alumines silicées et de manière préférée les silice alumines.

Un catalyseur d'hydroisomérisation préféré comprend une phase active à base de nickel et de tungstène et un support minéral amorphe silice alumines.

Selon un autre mode de réalisation préféré, ledit catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Olson and Ch. Baerlocher, 5th revised edition, 2001, Elsevier auquel se réfère également la présente demande. Les zéolithes y sont classées selon la taille de leurs ouvertures de pores ou canaux.

Les tamis moléculaires zéolithiques 10 MR monodimensionnels présentent des pores ou canaux dont l'ouverture est définie par un anneau à 10 atomes d'oxygène (ouverture à 10 MR). Les canaux du tamis moléculaire zéolithique ayant une ouverture à 10 MR sont avantageusement des canaux monodimensionnels non interconnectés qui débouchent directement sur l'extérieur de ladite zéolithe. Les tamis moléculaires zéolithiques 10 MR monodimensionnels présents dans ledit catalyseur d'hydroisomérisation comprennent avantageusement du silicium et au moins un élément T choisi dans le groupe formé par l'aluminium, le fer, le gallium, le phosphore et le bore, de préférence l'aluminium. Les rapports Si/Al des zéolithes décrites ci-dessus sont avantageusement ceux obtenus à la synthèse ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques. Elles sont, de préférence, pratiquement totalement, sous forme acide, c'est-à-dire que le rapport atomique entre le cation de compensation monovalent (par exemple le sodium) et l'élément T inséré dans le réseau cristallin du solide est avantageusement inférieur à 0,1, de préférence inférieur à 0,05 et de manière très préférée inférieur à 0,01. Ainsi, les zéolithes entrant dans la composition dudit catalyseur sélectif d'hydroisomérisation sont avantageusement calcinées et échangées par au moins un traitement par une solution d'au moins un sel d'ammonium de manière à obtenir la forme ammonium des zéolithes qui, une fois calcinée, conduisent à la forme acide desdites zéolithes.

Ledit tamis moléculaire zéolithique 10 MR monodimensionnel dudit catalyseur d'hydroisomérisation est avantageusement choisi parmi les tamis moléculaires zéolithiques de type structural TON, tel que la NU-10 ,FER, tel que la ferrierite, EUO, choisis parmi la EU-1 et la ZSM-50, prises seules ou en mélange, ou les tamis moléculaires zéolithiques ZSM-48, ZBM-30, IZM-1, COK-7, EU-2 et EU-11, pris seul ou en mélange. De manière préférée, ledit tamis moléculaire zéolithique 10 MR monodimensionnel est choisi parmi les tamis moléculaires zéolithiques ZSM-48, ZBM-30, IZM-1 et COK-7, pris seul ou en mélange. De manière encore plus préférée, ledit tamis moléculaire zéolithique 10 MR monodimensionnel est choisi parmi les tamis moléculaires zéolithiques ZSM-48 et ZBM-30, pris seul ou en mélange.

De manière très préférée, ledit tamis moléculaire zéolithique 10 MR monodimensionnel est la ZBM-30 et de manière encore plus préférée, ledit tamis moléculaire zéolithique 10 MR monodimensionnel est la ZBM-30 synthétisée avec le structurant organique triéthylènetétramine.

De préférence, le catalyseur d'hydroisomérisation comprend une phase active métallique constituée de platine et une fonction hydroisomérisante à base de ZBM-30 et de manière préférée, le catalyseur d'hydroisomérisation comprend une phase active métallique constituée de platine et une fonction hydroisomérisante à base de ZBM-30 synthétisée avec le structurant organique triéthylènetétramine.

La zéolithe ZBM-30 est décrite dans le brevet EP-A-46 504, et la zéolithe COK-7 est décrite dans les demandes de brevet EP 1 702 888 A1 ou FR 2 882 744 A1.

La zéolithe IZM-1 est décrite dans la demande de brevet FR-A-2 911 866.

Les zéolithes de type structural TON sont décrites dans l'ouvrage "Atlas of Zeolithe Structure Types", W.M. Meier, D.H. Olson and Ch. Baerlocher, 5th Revised edition, 2001, Elsevier.

La zéolithe de type structural TON est décrite dans l'ouvrage "Atlas of Zeolithe Structure Types", ci-dessus cité et en ce qui concerne la zéolithe NU-10, dans les brevets EP-65400 et EP-77624.

La zéolithe de type structural FER est décrite dans l'ouvrage "Atlas of Zeolithe Structure Types", ci-dessus cité.

La teneur en tamis moléculaire zéolithique 10 MR monodimensionnel est avantageusement comprise entre 5 et 95% poids, de préférence entre 10 et 90% poids, de manière plus préférée entre 15 et 85% poids et de manière très préférée entre 20 et 80% poids par rapport au catalyseur fini.

De préférence, ledit catalyseur d'hydroisomérisation comprend également un liant constitué d'une matrice minérale poreuse. Ledit liant peut avantageusement être utilisé durant l'étape de mise en forme dudit catalyseur d'hydroisomérisation.

De préférence, la mise en forme est réalisée avec un liant constitué d'une matrice contenant de l'alumine, sous toutes ses formes connues de l'homme du métier, et de manière très préférée avec une matrice contenant de l'alumine gamma.

Les catalyseurs d'hydroisomérisation obtenus sont avantageusement mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. D'autres techniques que l'extrusion, telles que le pastillage ou la dragéification, peuvent avantageusement être utilisées.

Dans le cas où le catalyseur d'hydroisomérisation contient au moins un métal noble, le métal noble contenu dans ledit catalyseur d'hydroisomérisation doit avantageusement être réduit. Une des méthodes préférées pour conduire la réduction du métal est le traitement sous hydrogène à une température comprise entre 150°C et 650°C et une pression totale comprise entre 1 et 250 bar. Par exemple, une réduction consiste en un palier à 150°C de deux heures puis une montée en température jusqu'à 450°C à la vitesse de 1 °C/min puis un palier de deux heures à 450°C ; durant toute cette étape de réduction, le débit d'hydrogène est de 1000 normaux $m^3$ hydrogène / $m^3$ catalyseur et la pression totale maintenue constante à 1 bar. Toute méthode de réduction ex-situ peut avantageusement être envisagée.

Dans l'étape d'hydroisomérisation, la charge est avantageusement mise en contact, en présence d'hydrogène avec ledit catalyseur d'hydroisomérisation, à des températures et des pressions opératoires permettant avantageusement de réaliser une hydroisomérisation de la charge non convertissante. Cela signifie que l'hydroisomérisation s'effectue avec une conversion de la fraction 150°C$^+$ en fraction 150°C$^-$ inférieure à 20% en poids, de manière préférée inférieure à 10% en poids et de manière très préférée inférieure à 5% en poids.

Ainsi, l'étape optionnelle d'hydroisomérisation du procédé selon l'invention opère avantageusement à une température comprise entre 150 et 500°C, de préférence entre 150°C et 450°C, et de manière très préférée, entre 200 et 450°C, à une pression comprise entre 1 MPa et 10 MPa, de préférence entre 1 MPa et 10 MPa et de manière très préférée, entre 2 MPa et 9 MPa, à une vitesse volumique horaire avantageusement comprise entre 0,1 h$^{-1}$ et 10 h$^{-1}$, de préférence entre 0,2 et 7 h$^{-1}$ et de manière très préférée, entre 0,5 et 5 h$^{-1}$, à un débit d'hydrogène tel que le rapport volumique hydrogène/hydrocarbures est avantageusement compris entre 70 et 1000 Nm$^3$/m$^3$ de charge, entre 100 et 1000 normaux m$^3$ d'hydrogène par m$^3$ de charge et de manière préférée entre 150 et 1000 normaux m$^3$ d'hydrogène par m$^3$ de charge.

De manière préférée, l'étape d'hydroisomérisation éventuelle opère à co-courant.

L'effluent hydroisomérisé est ensuite avantageusement soumis au moins en partie, et de préférence en totalité, à une ou plusieurs séparations. Le but de cette étape est de séparer les gaz du liquide, et notamment, de récupérer les gaz riches en hydrogène pouvant contenir également des légers tels que la coupe $C_1$ - $C_4$ et au moins une coupe gazole répondant aux spécifications et une coupe naphta. La valorisation de la coupe naphta n'est pas l'objet de la présente invention, mais cette coupe peut avantageusement être envoyée dans une unité de vapocraquage ou de reformage catalytique.

## Description de la figure

La figure illustre un mode de réalisation préféré du procédé selon l'invention.

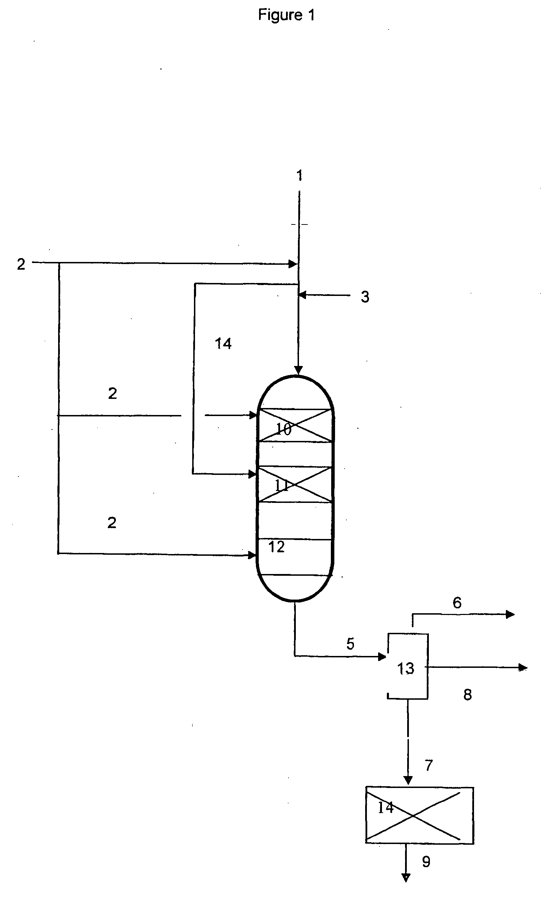

La charge issue de sources renouvelables (1) est mélangée avec l'hydrogène (2) et avec la charge d'origine pétrolière préalablement chauffée (3), les moyens de chauffage n'étant pas représentés sur la figure 1. Le mélange est introduit dans la première étape d'hydrotraitement a) comprenant deux zones catalytiques (10) et (11) dans laquelle ont lieu les réactions d'hydrogénation des insaturations et de désoxygénation selon la voie dite d'hydrodéoxygénation de la charge issue d'une source renouvelable limitant ainsi la formation de CO et de CO$_2$. L'effluent issu de la deuxième zone catalytique (11) de la première étape d'hydrotraitement a) est ensuite injecté dans la seconde étape d'hydrotraitement comprenant une zone catalytique (12) dans laquelle ont lieu les réactions classiques d'hydrotraitement et en particulier d'hydrodésulfuration. L'effluent issu de la deuxième zone catalytique (12) est alors introduit via la conduite (5) dans une zone de séparation gaz/liquide et de séparation d'eau (13) dans laquelle le flux gazeux (6), et l'eau (8) sont séparés de l'effluent liquide hydrocarboné (7). Une injection étagée de charge issue de source renouvelable est mise en oeuvrer via la conduite (14) dans la deuxième zone catalytique (11). L'effluent hydrocarboné (7) est envoyé dans une dernière zone catalytique d'hydro-isomérisation (14). L'effluent (9) produit est, après séparations des gaz, une base carburant (kérosène et/ou gazole) ayant une teneur en soufre inférieure à 10 ppm.

## Exemple

Les exemples qui suivent illustrent l'invention sans toutefois en limiter sa portée.

**Exemple 1 comparatif :** Procédé d'hydrotraitement d'un gazole pétrolier en une étape mettant en oeuvre un catalyseur d'hydrotraitement de type NiMoP/alumine.(non conforme à l'invention)

Il ne s'agit donc pas d'un procédé d'hydrotraitement en co-traitement d'une charge pétrolière en mélange avec une charge issue de sources renouvelables, seule une charge pétrolière est traitée.

La charge pétrolière traitée dans l'exemple 1 comparatif est un gazole atmosphérique de distillation directe, issu d'un brut d'origine Moyen-Orient. Ses principales caractéristiques sont les suivantes :

- Densité à 15°C          0,8522 g/cm3
- Soufre          13000 ppm poids
- Azote          120 ppm poids
- Aromatiques totaux          29,5 % poids
- Diaromatiques+          12 % poids
- Cétane moteur          56
- TLF(*)          +1°C

(*) Température Limite de Filtrabilité

L'hydrotraitement de cette charge est réalisée dans une unité isotherme en lit fixe de type courant descendant contenant 100 ml de catalyseur de type NiMoP/alumine en chargement dense. Le catalyseur contient 21,0 % poids de MoO3, 5,0 % poids de P2O5 et 4,3 % poids de NiO, supporté sur alumine gamma et présente un rapport atomique Ni/Mo égal à 0,4. Le catalyseur a été sulfuré in situ dans l'unité sous pression, en additionnant 2% poids de diméthyldisulfure au gazole pétrolier.

L'effluent issu de l'étape d'hydrotraitement est ensuite hydroisomérisé sur 50 ml de catalyseur de type NiW/silice-alumine caractérisé par une teneur en NiO de 3,5 % poids et une teneur en WO3 de 27% poids placé en aval de la zone catalytique contenant le catalyseur d'hydrotraitement NiMoP.

Le tableau 1 ci-après indique les conditions opératoires de l'hydrotraitement employées ainsi que les caractéristiques de la coupe gazole produite.

**Tableau 1**

| Caractéristiques de la coupe gazole produite par hydrotraitement d'un gazole pétrolier sur catalyseur NiMoP/alumine | |
|---|---|
| **Conditions opératoires** | |
| Pression totale (MPa rel) | 5 |
| $H_2$/HC entrée réacteur (Nl/l) | 700 |
| VVH ($h^{-1}$) | 1,6 |
| Température (°C) | 350 |
| **Caractéristiques base carburant (coupe 150°C+)** | |
| Soufre (ppm poids) | 8 |
| Azote (ppm poids) | 5 |
| Aromatiques totaux (% poids) | 25,0 |
| Diaromatiques+ (% poids) | 6,0 |
| Cétane moteur | 58 |
| TLF (°C) | +1 |

**Exemple 2 comparatif :** Procédé d'hydrotraitement en deux étapes d'un mélange constitué d'une charge pétrolière et d'une huile végétale mettant en oeuvre un catalyseur classique de type NiMo / alumine dans les deux étapes d'hydrotraitement (non conforme à l'invention) sans strippage intermédiaire

La charge pétrolière est identique au gazole atmosphérique de distillation directe, issu d'un brut d'origine Moyen-Orient, dont les caractéristiques sont indiquées dans le tableau 1 de l'exemple 1.

La charge issue d'une source renouvelable est une huile végétale de colza au grade DNS (dégommée, neutralisée et séchée) dont les caractéristiques principales sont les suivantes :

- Densité à 15°C          0,920 g/cm$^3$
- Soufre          5 ppm pds

Le procédé d'hydrotraitement selon l'exemple 2 traite une charge constituée d'un mélange de 70 % poids de la charge pétrolière ci-dessus en mélange avec 30% poids de l'huile de colza DNS. La teneur en soufre de la charge globale à traiter est ainsi de 9100 ppm poids, sa teneur en azote de 84 ppm poids, sa teneur en aromatiques totaux de 20,7·% poids et sa teneur en diaromatiques+ est de 8,4 % poids.

Le co-traitement de ce mélange est réalisé dans une unité isotherme en lit fixe de type courant descendant contenant 100 ml de catalyseur de type NiMoP/alumine en chargement dense. Le catalyseur NiMoP est de même composition que celui décrit dans l'exemple 1, à savoir 21,0 % poids de MoO$_3$, 5,0 % poids de P$_2$O$_5$ et 4,3 % poids de NiO, supporté sur alumine gamma et présente un rapport atomique Ni/Mo égal à 0,4. Le même catalyseur est employé dans les deux étapes d'hydrotraitement du procédé selon l'exemple 2 pour. réaliser les réactions d'HDO (déoxygénation) et d'HDS (hydrodésulfuration) et donc dans deux zones catalytiques. Les deux étapes d'hydrotraitement sont mises en oeuvre sans étape de strippage intermédiaire. La totalité de l'effluent hydrotraité subit ensuite une étape de séparation d'eau par décantation et l'effluent hydrocarboné liquide subit ensuite une étape d'hydroisomérisation afin d'améliorer par hydroisomérisation les propriétés à froid de la coupe gazole, et en particulier la température limite de filtrabilité, sur 50 ml de catalyseur de type NiW/silice-alumine caractérisé par une teneur en NiO de 3,5 % poids et une teneur en WO3 de 27% poids, ledit catalyseur étant placé en aval des zones catalytiques contenant le catalyseur d'hydrotraitement NiMoP.

Après sulfuration in situ des catalyseurs à 350°C dans l'unité sous pression, réalisée en ajoutant 2% poids de diméthyldisulfure au gazole pétrolier, l'hydrotraitement a été ensuite conduit dans les conditions suivantes, résumées dans le tableau 2.

**Tableau 2**

| Conditions opératoires des différentes zones catalytiques | |
|---|---|
| Débit de charge total ($cm^3$/h) | 160 |
| Pression totale (MPa rel) | 5 |
| Zone 1 (HDO) | |
| $H_2$/HC entrée (N l/l) | 700 |
| VVH catalyseur NiMoP ($h^{-1}$) | 3,2 |
| Température (°C) | 300 |
| Zone 2 (HDS) | |
| $N_2$/HC entrée (N l/l) | 700 |
| VVH catalyseur NiMoP ($h^{-1}$) | 3,2 |
| Température (°C) | 350 |
| Zone 3 (hydroisom) | |
| $H_2$/HC entrée (N l/l) | 700 |
| VVH catalyseur NiW ($h^{-1}$) | 3,2 |
| Température (°C) | 340 |

Le tableau 3 ci-après indique les rendements obtenus dans les différentes zones catalytiques (exprimés en % poids par rapport à la charge fraîche de départ), ainsi que les principales caractéristiques de la coupe carburant produite à la sortie de chaque zone.

**Tableau 3**

| Rendements obtenus dans chaque zone d'hydrotraitement et caractéristique de la coupe obtenue. | | | |
|---|---|---|---|
| Zone d'hydrotraitement | Zone 1 NiMoP (HDO) | Zone 2 NiMoP (HDS) | Zone 3 NiW (Hydroisom) |
| Taux de déoxygénation (%) | 100 | - | - |
| Sélectivité HDO (% pds) | 70 | - | - |
| Rendements (%pds/charge fraîche) | | | |
| $H_2S$ | | 0,9 | 0,9 |
| C1+C2 | | 0,2 | 0,2 |
| C3 | | 1,5 | 1,5 |
| C4 | | 0,1 | 0,1 |
| CO + $CO_2$ | | 1,4 | 1,4 |
| $H_2O$ | | 2,6 | 2,6 |
| Naphta (150°C-) | | - | 7,0 |
| Kérosène + Gazole (150°C+) | | 94,7 | 87,7 |
| Conso $H_2$ | | 1,4 | 1,4 |

(suite)

| Rendements obtenus dans chaque zone d'hydrotraitement et caractéristique de la coupe obtenue. | | | |
|---|---|---|---|
| Zone d'hydrotraitement | Zone 1 NiMoP (HDO) | Zone 2 NiMoP (HDS) | Zone 3 NiW (Hydroisom) |
| Caractéristiques base carburant (coupe 150°C+) | | | |
| Soufre (ppm poids) | 1250 | 240 | 200 |
| Azote (ppm poids) | 40 | 10 | 10 |
| Aromatiques tot (% pds) | 19,3 | 18,0 | 18,0 |
| Diaros+ (% pds) | 7,5 | 6,5 | 6,5 |
| Cétane moteur | 59 | 60 | 60 |
| TLF (°C) | +1 | +1 | -1 |

Dans l'étape 1 d'hydrotraitement visant essentiellement à déoxygéner l'huile de colza, le taux de désoxygénation est total, mais la sélectivité de la voie HDO (hydrodéoxygénation avec élimination de l'oxygène sous forme d'eau) est de 70%.

La sélectivité en hydrodéoxygénation (HDO) est calculée de la manière suivante :

Si on note $R_{DCO}$ le rendement théorique en $CO+CO_2$ pour une charge issue de source renouvelable donnée, qui se transforme exclusivement selon la voie décarboxylation (DCO), exprimé en pourcentage poids par rapport à la charge, et R le rendement en $CO + CO_2$ obtenu expérimentalement lors de l'hydrotraitement d'une charge issue de source renouvelable pure, alors on définit $S_{HDO}$ comme étant la sélectivité en HDO par l'équation simple suivante.

$$S_{hydro} = 100 * (R_{DCO}-R)/R_{DCO}$$

On observe, par rapport aux résultats décrits dans l'exemple 1 traitant uniquement une charge pétrolière, et obtenus dans les mêmes conditions opératoires d'hydrotraitement, une nette dégradation de la performance HDS, puisque la teneur en soufre de la coupe distillat moyen obtenue est de 200 ppm. Pour satisfaire les spécifications requises de 10 ppm poids maximum sur la coupe gazole, il est nécessaire d'augmenter la température opératoire de 20°C. Cependant, augmenter ainsi la température de l'opération est pénalisant en particulier en terme de vitesse de désactivation du catalyseur par cokage, et conduit industriellement à une réduction importante de la durée de cycle du catalyseur.

**Exemple 3 selon l'invention :** Procédé d'hydrotraitement d'un mélange constitué d'une charge pétrolière et d'une huile végétale mettant en oeuvre un enchaînement de catalyseurs NiMo/alumine présentant un rapport atomique Ni/Mo égal à 0,02 + NiMo/alumine classique présentant un rapport atomique Ni/Mo égal à 0,4 dans les deux étapes d'hydrotraitement a) et b).

La charge pétrolière et la charge huile de colza sont strictement identiques à celles décrites dans l'exemple 2. Le mélange traité est également strictement identique à celui décrit dans l'exemple 2 et constitué de 70% poids de gazole pétrolier et 30% poids d'huile de colza DNS.

Le co-traitement de ce mélange est réalisé dans une unité isotherme en lit fixe de type courant descendant:

La charge globale subit une première étape d'hydrotraitement a) dans laquelle la charge passe dans une zone catalytique comprenant 50 ml de catalyseur NiMoP/alumine présentant un rapport atomique Ni/Mo égal à 0,02 destiné à privilégier les réactions d'HDO de l'huile végétale.

L'effluent issu de la première étape d'hydrotraitement a) est directement envoyé sans étape de strippage intermédiaire dans une seconde étape d'hydrotraitement b) comprenant 50 ml de catalyseur NiMoP/alumine présentant un rapport atomique Ni/Mo égal à 0,4 et destiné à privilégier les réactions d'HDS de la charge.

La totalité de l'effluent hydrotraité subit ensuite une étape de séparation d'eau par décantation et l'effluent hydrocarboné liquide subit ensuite une étape d'hydroisomérisation sur 50 ml de catalyseur de type NiW/alumine, destiné à améliorer les propriétés à froid et en particulier la température limite de filtrabilité, de la coupe gazole.

Le catalyseur NiMoP/alumine utilisé dans la zone catalytique de la première étape d'hydrotraitement a) est caractérisé par une teneur en NiO de 0,22 % poids, une teneur en $MoO_3$ de 21 % poids et une teneur en $P_2O_5$ de 5 % poids, et donc par un rapport atomique Ni/Mo égal à 0,02, ledit catalyseur étant supporté sur une alumine gamma.

Le catalyseur NiMoP/alumine utilisé dans la zone catalytique de la deuxième étape d'hydrotraitement b) est de même composition que celui décrit dans l'exemple 1, à savoir 21,0 % poids de $MoO_3$ 5,0 % poids de $P_2O_5$ et 4,3 % poids de NiO, et donc un rapport atomique Ni/Mo égal à 0,4, ledit catalyseur étant supporté sur alumine gamma.

Le catalyseur NiW/silice-alumine, utilisé pour réaliser essentiellement l'hydroisomérisation des paraffines issues de la transformation de l'huile végétale à l'issu des première et seconde étapes d'hydrotraitement a) et b), est caractérisé par une teneur en NiO de 3,5 % poids et une teneur en $WO_3$ de 27% poids.

Les catalyseurs sont préparés par imprégnation à sec des précurseurs oxydes en solution aqueuse. La méthode de préparation des catalyseurs ne limite pas la portée de l'invention. Après sulfuration in situ des catalyseurs à 350°C dans l'unité sous pression, réalisée en ajoutant 2% poids de diméthyldisulfure au gazole pétrolier, l'hydrotraitement a été ensuite conduit dans les conditions suivantes, résumées dans le tableau 4. Les conditions opératoires sont identiques à celles employées pour l'exemple 2. Seule est modifiée la nature du catalyseur employée pour réaliser essentiellement l'étape de désoxygénation et en particulier la première étape d'hydrotraitement a) d'hydrodéoxygénation.

**Tableau 4**

| Conditions opératoires des différentes zones catalytiques | |
|---|---|
| Débit de charge total (ml/h) | 160 |
| Pression totale (MPa rel) | 5 |
| Zone 1 (HDO) <br> $H_2$/HC entrée (N l/l) <br> VVH catalyseur NiMoP [Ni/Mo 0,02] ($h^{-1}$) <br> Température (°C) | 700 <br> 3,2 <br> 300 |
| Zone 2 (HDS) <br> $H_2$/HC entrée (N l/l) <br> VVH catalyseur NiMoP [Ni/Mo 0,4] ($h^{-1}$) <br> Température (°C) | 700 <br> 3,2 <br> 350 |
| Zone 3 (hydroisom) <br> $H_2$/HC entrée (N l/l) <br> VVH catalyseur NiW ($h^{-1}$) <br> Température (°C) | 700 <br> 3,2 <br> 340 |

Le tableau 5 ci-après indique les rendements obtenus dans les différentes zones catalytiques (exprimés en % poids par rapport à la charge fraîche de départ), ainsi que les principales caractéristiques de la coupe carburant produite à la sortie de chaque zone.

**Tableau 5**

| Rendements obtenus dans chaque étape d'hydrotraitement et caractéristique de la coupe obtenue | | | |
|---|---|---|---|
| Zone d'hydrotraitement | Zone 1 (HDO) | Zone 2 (HDS) | Zone 3 (Hydroisom) |
| Catalyseur <br> Ni/Mo [at/at.] | NiMoP <br> 0,02 | NiMoP <br> 0,4 | NiW <br> - |
| Taux de déoxygénation (%) <br> Sélectivité HDO (% pds) | 100 <br> 96,8 | - <br> - | - <br> - |
| Rendements (%pds/charge fraîche) <br> $H_2S$ <br> C1+C2 | | 0,9 <br> 0,2 | 0,9 <br> 0,2 |
| C3 <br> C4 <br> CO +$CO_2$ <br> $H_2O$ | | 1,5 <br> 0,1 <br> 0,3 <br> 3,5 | 1,5 <br> 0,1 <br> 0,3 <br> 3,5 |

(suite)

| Rendements obtenus dans chaque étape d'hydrotraitement et caractéristique de la coupe obtenue | | | |
|---|---|---|---|
| Zone d'hydrotraitement | Zone 1 (HDO) | Zone 2 (HDS) | Zone 3 (Hydroisom) |
| Naphta (150°C-) | | - | 6,0 |
| Kérosène + Gazole (150°C+) | | 95,0 | 89,0 |
| Conso H$_2$ | | 1,5 | 1,5 |
| Caractéristiques base carburant (coupe 150°C+) | | | |
| Soufre (ppm poids) | 1500 | 8 | 6 |
| Azote (ppm poids) | 50 | 6 | G |
| Aromatiques tot (% pds) | 19,5 | 17,5 | 17,5 |
| Diaros+ (% pds) | 8,0 | 6,0 | 6,0 |
| Cétane moteur | 58 | 63 | 62 |
| TLF (°C) | +1 | +1 | -3 |

Par rapport aux résultats décrits dans l'exemple 2 (non conforme à l'invention), on observe :

- une amélioration du rendement en base gazole, du fait des meilleurs rendements massiques en base gazole obtenus en privilégiant la voie hydrodéoxygénation (HDO).
- une meilleure qualité de la base gazole produite.
- une amélioration très importante de la performance en hydrodésulfuration (HDS), ce qui permet de produire, à la température de 350°C pour la seconde étape d''hydrotraitement b) d'HDS, une base gazole répondant aux spécifications en soufre de 10 ppm poids maximum.

Ce résultat est accessible grâce à la sélectivité particulièrement élevée du catalyseur selon l'invention NiMo présentant un rapport atomique Ni/Mo bien défini, utilisé dans la première étape d'hydrotraitement a) qui favorise grandement la désoxygénation de l'huile végétale selon la voie hydrodéoxygénation (HDO) (qui s'accompagne de la formation d'eau) plutôt que selon la voie décarboxylation (qui s'accompagne de la formation de CO et CO$_2$) par rapport au catalyseur NiMo classique utilisé dans la première étape d'hydrotraitement de l'exemple comparatif 2. La très faible quantité de CO et CO$_2$ formé témoigne de cette très bonne sélectivité en hydrodéoxygénation (HDO).

**Revendications**

1.  Procédé d'hydrotraitement en co-traitement de charges pétrolières, en mélange avec au moins une charge issue de sources renouvelables, pour produire des bases carburants ayant une teneur en soufre inférieure à 10 ppm , ledit procédé comprenant les étapes suivantes :

    a) une première étape d'hydrotraitement dans laquelle ladite charge passe dans au moins une première zone catalytique en lit fixe comprenant au moins un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095,
    b) une seconde étape d'hydrotraitement dans laquelle l'effluent issu de la première étape d'hydrotraitement est directement envoyé, et dans laquelle ledit effluent passe dans au moins une seconde zone catalytique en lit fixe comprenant au moins un catalyseur d'hydrotraitement.

2.  Procédé selon la revendication 1 dans lequel la température du flux entrant dans la première zone catalytique de la première étape d'hydrotraitement a), ledit flux étant constitué du mélange de la charge issue de source renouvelable et de la charge pétrolière est comprise entre 180 et 220 °C.

3.  Procédé selon l'une des revendications 1 ou 2 la phase active dudit catalyseur est constituée d'au moins un élément du groupe VIB, ledit élément du groupe VIB étant le molybdène et d'au moins un élément du groupe VIII, ledit élément du groupe VIII étant le nickel.

4. Procédé selon l'une des revendications 1 à 3 dans lequel le rapport atomique du métal (ou métaux) du groupe VIII sur métal (ou métaux) du groupe VIB est compris entre 0,01 et 0,03.

5. Procédé selon l'une des revendications 1 à 4 dans lequel dans le cas ou le catalyseur est sous forme supportée, la teneur en oxyde d'élément du groupe VIB est comprise entre 1 % et 30 % poids par rapport à la masse totale du catalyseur et la teneur en oxyde d'élément du groupe VIII est strictement supérieure à 0 % et inférieure à 1,5 %poids d'oxyde par rapport à la masse totale du catalyseur.

6. Procédé selon l'une des revendications 1 à 5 dans lequel la première étape d'hydrotraitement a) est une étape d'hydrogénation des insaturations des chaînes d'acides gras des triglycérides et de l'hydrodéoxygénation de charge.

7. Procédé selon l'une des revendications 1 à 6 dans lequel la première étape d'hydrotraitement a) opère à une température.comprise entre 120 à 450°C, à une pression totale comprise entre 1 et 10 MPa, à une vitesse volumique horaire comprise entre 0,1 et 10 h$^{-1}$ et à un rapport hydrogène/charge exprimé en volume d'hydrogène, mesuré dans les conditions normales de température et pression, par volume de charge liquide généralement compris entre 50 NI/I et 3000 NI/I.

8. Procédé selon l'une des revendications 1 à 7 dans lequel la sélectivité en hydrodéoxygénation (HDO) de la première étape d'hydrotraitement a) est supérieure à 95%.

9. Procédé selon l'une des revendications 1 à 8 dans lequel l'effluent issu de la première étape d'hydrotraitement a) est directement envoyé, sans étape de strippage intermédiaire dans la deuxième étape d'hydrotraitement b).

10. Procédé selon l'une des revendications 1 à 9 dans lequel la température de l'effluent sortant de la première étape d'hydrotraitement a) est supérieure à 300°C.

11. Procédé selon l'une des revendications 1 à 9 dans lequel le catalyseur d'hydrotraitement utilisé dans la deuxième étape d'hydrotraitement b) comprend le nickel comme élément du groupe VIII et le molybdène comme élément du groupe VIB et ledit catalyseur comprend une teneur en oxyde de nickel comprise entre 0,5 et 10 % poids et une teneur en trioxyde de molybdène comprise entre 1 et 30 % poids sur un support minéral amorphe alumine, les pourcentages étant exprimés en % poids par rapport à la masse totale du catalyseur.

12. Procédé selon l'une des revendications 1 à 11 dans lequel l'effluent hydrotraité subit une étape de séparation de l'eau et d'au moins une base hydrocarbonée liquide.

13. Procédé selon l'une des revendications 1 à 12 dans lequel la totalité de l'effluent liquide hydrotraité subit ensuite une étape d'hydroisomérisation en présence d'un catalyseur d'hydroisomérisation sélective.

14. Procédé selon l'une des revendications 1 à 13 dans lequel les charges pétrolières sont choisies dans le groupe formé par les gazoles atmosphériques de distillation directe, les gazoles issus de procédés de conversion et les charges issues de sources renouvelables sont choisies parmi les huiles et graisses d'origine végétale ou animale, ou des mélanges de telles charges, contenant des triglycérides et/ou des acides gras libres et/ou des esters.

15. Procédé selon l'une des revendications 1 à 14 dans lequel le mélange charge pétrolière conventionnelle et charge issue d'une source renouvelable est constitué de 60 à 99% en poids de charge pétrolière conventionnelle et de 1 à 40% poids de charge issue de source renouvelable.

**Patentansprüche**

1. Verfahren zur Hydrobehandlung in Form einer gemeinsamen Behandlung von Erdölchargen in Mischung mit mindestens einer Charge, die aus erneuerbaren Quellen stammt, um Kraftstoffgrundlagen mit einem Schwefelgehalt von weniger als 10 ppm zu erzeugen, wobei das Verfahren die folgenden Schritte umfasst:

a) einen ersten Hydrobehandlungsschritt, bei welchem die Charge in mindestens einen ersten katalytischen Festbettbereich gelangt, der mindestens einen Vollkatalysator oder geträgerten Katalysator umfasst, der eine aktive Phase umfasst, welche aus mindestens einem Element der Gruppe VIB und mindestens einem Element der Gruppe VIII besteht, wobei die Elemente als Sulfide vorliegen und das Atomverhältnis des Metall (oder der Metalle) der Gruppe VIII zu dem Metall (oder den Metallen) der Gruppe VIB streng größer als 0 und kleiner als 0,095 ist,
b) einen zweiten Hydrobehandlungsschritt, welchem der Stoffstrom, der aus dem ersten Hydrobehandlungsschritt stammt, direkt zugeführt wird und bei welchem der Stoffstrom in mindestens einen zweiten katalytischen Festbettbereich gelangt, der mindestens einen Hydrobehandlungskatalysator umfasst.

2. Verfahren nach Anspruch 1, wobei die Temperatur des Stoffstroms, der in den ersten katalytischen Bereich des ersten Hydrobehandlungsschrittes a) einströmt, wobei der Stoffstrom aus der Mischung der Charge, welche aus einer erneuerbaren Quelle stammt, und der Erdölcharge besteht, im Bereich von 180 bis 220°C liegt.

3. Verfahren nach einem der Ansprüche 1 oder 2, wobei die aktive Phase des Katalysators aus mindestens einem Element der Gruppe VIB, wobei es sich bei dem Element der Gruppe VIB um Molybdän handelt, und mindestens einem Element der Gruppe VIII, wobei es sich bei dem Element der Gruppe VIII um Nickel handelt, besteht.

4. Verfahren nach einem der Ansprüche 1 bis 3, wobei das Atomverhältnis des Metalls (oder der Metalle) der Gruppe VIII zum Metall (oder zu den Metallen) der Gruppe VIB im Bereich von 0,01 bis 0,03 liegt.

5. Verfahren nach einem der Ansprüche 1 bis 4, wobei für den Fall, dass der Katalysator in geträgerter Form vorliegt, der Gehalt an Oxid des Elements der Gruppe VIB im Bereich von 1 bis 30 Gewichts-% unter Bezugnahme auf die Gesamtmasse des Katalysators liegt und der Gehalt an Oxid des Elements der Gruppe VIII streng höher als 0 und niedriger als 1,5 Gewichts-% an Oxid unter Bezugnahme auf die Gesamtmasse des Katalysators liegt.

6. Verfahren nach einem der Ansprüche 1 bis 5, wobei der erste Hydrobehandlungsschritt a) ein Schritt zum Hydrieren der ungesättigten Stellen der Fettsäureketten der Triglyceride und zur Hydrodesoxygenierung der Charge ist.

7. Verfahren nach einem der Ansprüche 1 bis 6, wobei der erste Hydrobehandlungsschritt a) bei einer Temperatur im Bereich von 120 bis 450°C, bei einem Gesamtdruck im Bereich von 1 bis 10 MPa, bei einer stundenbezogenen Raumgeschwindigkeit im Bereich von 0,1 bis 10 h$^{-1}$ und bei einem Wasserstoff/Chargen-Verhältnis, ausgedrückt in Wasserstoffvolumen, welches unter Normalbedingungen der Temperatur und des Drucks gemessen wurde, pro Volumen an flüssiger Charge, das im Allgemeinen im Bereich von 50 Nl/l bis 3000 Nl/l liegt, betrieben wird.

8. Verfahren nach einem der Ansprüche 1 bis 7, bei welchem die Selektivität der Hydrodesoxygenierung (HDO) im ersten Hydrobehandlungsschritt a) mehr als 95% beträgt.

9. Verfahren nach einem der Ansprüche 1 bis 8, wobei der Stoffstrom, der aus dem ersten Hydrobehandlungsschritt a) stammt, auf direkte Weise, ohne Einfügung eines Strippungsschrittes, dem zweiten Hydrobehandlungsschritt b) zugeführt wird.

10. Verfahren nach einem der Ansprüche 1 bis 9, bei welchem die Temperatur des Stoffstroms, der den ersten Hydrobehandlungsschritt a) verlässt, mehr als 300°C beträgt.

11. Verfahren nach einem der Ansprüche 1 bis 9, bei welchem der Hydrobehandlungskatalysator, der im zweiten Hydrobehandlungsschritt b) verwendet wird, Nickel als Element der Gruppe VIII und Molybdän als Element der Gruppe VIB umfasst und der Katalysator einen Gehalt an Nickeloxid im Bereich von 0,5 bis 10 Gewichts-% und einen Gehalt als Molybdäntrioxid im Bereich von 1 bis 30 Gewichts-% auf einem amorphen mineralischen Träger aus Aluminiumoxid umfasst, wobei die Prozentangaben in Gewichts-% unter Bezugnahme auf die Gesamtmasse des Katalysators ausgedrückt sind.

12. Verfahren nach einem der Ansprüche 1 bis 11, wobei der hydrobehandelte Stoffstrom einen Schritt der Auftrennung in Wasser und mindestens eine flüssige kohlenwasserstoffhaltige Grundlage erfährt.

13. Verfahren nach einem der Ansprüche 1 bis 12, wobei der gesamte hydrobehandelte flüssige Stoffstrom anschließend einen Hydroisomerisierungsschritt in Gegenwart eines selektiven Hydroisomerisierungskatalysators erfährt.

14. Verfahren nach einem der Ansprüche 1 bis 13, wobei die Erdölchargen aus der Gruppe ausgewählt sind, die von den direkt bei Atmosphärendruck destillierten Dieselfraktionen, den Dieselfraktionen aus Umwandlungsverfahren gebildet wird, und wobei die Chargen, welche aus erneuerbaren Quellen stammen, aus den Ölen und Fetten pflanzlicher oder tierischer Herkunft oder aus den Mischungen derartiger Chargen, die Triglyceride und/oder freie Fettsäuren und/oder Ester enthalten, ausgewählt sind.

15. Verfahren nach einem der Ansprüche 1 bis 14, wobei die Mischung aus einer herkömmlichen Erdölcharge und einer Charge, die aus einer erneuerbaren Quelle stammt, zu 60 bis 99 Gewichts-% aus der herkömmlichen Erdölcharge und zu 1 bis 40 Gewichts-% aus der Charge, die aus erneuerbarer Quelle stammt, besteht.

**Claims**

1. Method of hydrotreatment in co-processing of petroleum feeds, in a mixture with at least one feed obtained from renewable sources, for producing fuel bases having a sulphur content below 10 ppm, said method comprising the following stages:

   a) a first hydrotreatment stage in which said feed passes through at least one first fixed-bed catalytic zone comprising at least one bulk or supported catalyst comprising an active phase constituted by at least one group VIB element and at least one group VIII element, said elements being in the form of sulphide and the atomic ratio of the group VIII metal (or metals) to group VIB metal (or metals) being strictly greater than 0 and less than 0.095,
   b) a second hydrotreatment stage into which the effluent from the first hydrotreatment stage is sent directly, and in which said effluent passes through at least one second fixed-bed catalytic zone comprising at least one hydrotreatment catalyst.

2. Method according to claim 1 in which the temperature of the stream entering the first catalytic zone of the first hydrotreatment stage a), said stream being constituted by the mixture of the feed obtained from a renewable source and of the petroleum feed, is comprised between 180 and 220°C.

3. Method according to one of claims 1 or 2 in which the active phase of said catalyst is constituted by at least one group VIB element, said group VIB element being molybdenum and at least one group VIII element, said group VIII element being nickel.

4. Method according to one of claims 1 to 3 in which the atomic ratio of the group VIII metal (or metals) to group VIB metal (or metals) is comprised between 0.01 and 0.03.

5. Method according to one of claims 1 to 4 in which in the case when the catalyst is in the supported form, the oxide content of group VIB element is comprised between 1 and 30 wt.% relative to the total weight of the catalyst and the oxide content of group VIII element is strictly greater than 0% and less than 1.5 wt.% of oxide relative to the total weight of the catalyst.

6. Method according to one of claims 1 to 5 in which the first hydrotreatment stage a) is a stage of hydrogenation of the unsaturations of the fatty acid chains of the triglycerides and hydrodeoxygenation of the feed.

7. Method according to one of claims 1 to 6 in which the first hydrotreatment stage a) operates at a temperature comprised between 120 to 450°C, at a total pressure comprised between 1 and 10 MPa, at an hourly space velocity comprised between 0.1 and 10 h$^{-1}$ and at a hydrogen/feed ratio expressed as volume of hydrogen, measured under normal conditions of temperature and pressure, per volume of liquid feed generally comprised between 50 Nl/l and 3000 Nl/l.

8. Method according to one of claims 1 to 7 in which the selectivity for hydrodeoxygenation (HDO) of the first hydrotreatment stage a) is greater than 95%.

9. Method according to one of claims 1 to 8 in which the effluent from the first hydrotreatment stage a) is sent directly, without an intermediate stripping stage, to the second hydrotreatment stage b).

10. Method according to one of claims 1 to 9 in which the temperature of the effluent leaving the first hydrotreatment stage a) is above 300°C.

11. Method according to one of claims 1 to 9 in which the hydrotreatment catalyst used in the second hydrotreatment stage b) comprises nickel as group VIII element and molybdenum as group VIB element and said catalyst comprises a content of nickel oxide comprised between 0.5 and 10 wt.% and a content of molybdenum trioxide comprised between 1 and 30 wt.% on an alumina amorphous mineral support, the percentages being expressed in wt.% relative to the total weight of the catalyst.

12. Method according to one of claims 1 to 11 in which the hydrotreated effluent is subjected to a stage of separation of water and of at least one liquid hydrocarbon base.

13. Method according to one of claims 1 to 12 in which all of the hydrotreated liquid effluent is then subjected to a hydroisomerization stage in the presence of a selective hydroisomerization catalyst.

14. Method according to one of claims 1 to 13 in which the petroleum feeds are selected from the group comprising atmospheric gas oils from direct distillation, gas oils obtained from conversion processes, and the feeds obtained from renewable sources are selected from oils and fats of vegetable or animal origin, or mixtures of said feeds, containing triglycerides and/or free fatty acids and/or esters.

15. Method according to one of claims 1 to 14 in which the mixture of conventional petroleum feed and feed from a renewable source is constituted by 60 to 99 wt.% of conventional petroleum feed and 1 to 40 wt.% of feed from a renewable source.

Figure 1

## RÉFÉRENCES CITÉES DANS LA DESCRIPTION

**Documents brevets cités dans la description**

- EP 1693432 A1
- FR 2904324
- US 20030221994 A
- WO 08084145 A
- FR 2910483
- EP 46504 A
- EP 1702888 A1
- FR 2882744 A1
- FR 2911866 A
- EP 65400 A
- EP 77624 A

**Littérature non-brevet citée dans la description**

- **A. ROSSSIGNOL-CASTERA.** La thermo-oxydation des huiles végétales. Institut des corps gras ITERG, 2006
- **J.L. PERRIN.** Etude analytique profonde d'huiles chauffées-Techniques analytiques et essais préliminaires. *Revue française des corps gras,* 1992, vol. 32 (4), 151-158
- **SUN et al.** *Catalysis Today,* 2003, vol. 86, 173
- **W. M MEIER ; D. H. OLSON ; CH. BAERLOCHER.** Atlas of Zeolite Structure Types. Elsevier, 2001
- **W.M. MEIER ; D.H. OLSON ; CH. BAERLOCHER.** Atlas of Zeolithe Structure Types. Elsevier, 2001